# EUROPEAN PATENT APPLICATION

(11) **EP 4 510 665 A1**
(43) Date of publication of application: **19.02.2025**
(21) Application number: 23799261.5
(22) Date of filing: 04.05.2023
(51) Int. Cl.: H04W 12/37

(54) **COMMUNICATION METHOD AND APPARATUS, TERMINAL, NETWORK SIDE DEVICE AND MEDIUM**

(30) Priority: 05.05.2022 CN 202210483840; 13.05.2022 CN 202210523952
(71) Applicant: Vivo Mobile Communication Co., Ltd., Dongguan, Guangdong 523863 (CN)
(72) Inventor: CHENG, Sihan, Dongguan, Guangdong 523863 (CN); WU, Xiaobo, Dongguan, Guangdong 523863 (CN)
(74) Representative: Murgitroyd & Company
(86) International application number: PCT/CN2023/092084
(87) International publication number: WO 2023/213275

(57) **Abstract**

This application discloses a communication method and apparatus, a terminal, a network side device, and a medium, which belong to the field of communication technologies. The communication method in the embodiments of this application includes: sending, by a first terminal, description information of a target application to a second terminal; receiving response information sent by the second terminal, where the response information is determined by the second terminal based on the description information of the target application; and determining, based on the response information, whether to communicate with the second terminal through the target application.

## Description

### CROSS-REFERENCE TO RELATED APPLICATION

This application claims priority to Chinese Patent Application No. 202210483840.2, filed with the National Intellectual Property Office on May 5, 2022 and entitled "COMMUNICATION METHOD AND APPARATUS, TERMINAL, NETWORK SIDE DEVICE, AND MEDIUM" and Chinese Patent Application No. 202210523952.6, filed with the National Intellectual Property Office on May 13, 2022 and entitled "COMMUNICATION METHOD AND APPARATUS, TERMINAL, NETWORK SIDE DEVICE, AND MEDIUM", which are incorporated herein by reference in their entireties.

### TECHNICAL FIELD

This application belongs to the field of communication technologies, and specifically relates to a communication method and apparatus, a terminal, a network side device, and a medium.

### BACKGROUND

Usually, during a call between a terminal 1 and another terminal (hereinafter referred to as a terminal 2 for short), a user of the terminal 1 can trigger the terminal 1 to establish an application-specific data channel (Data Channel, DC) with the terminal 2, so that the terminal 1 and the terminal 2 can perform an application-specific service (for example, screen sharing, location sharing, and file transfer) through the DC, thereby improving user experience.

However, a user of the terminal 2 may not want the terminal 2 to perform the application-specific service through the DC, but the terminal 2 has already performed the application-specific service through the DC. Therefore, this may cause privacy leakage of the user of the terminal 2.

In this way, the security of the terminal is poor.

### SUMMARY

Embodiments of the present application provide a communication method and apparatus, a terminal, a network side device, and a medium, which can solve the problem that the security of a terminal is poor.

According to a first aspect, a communication method is provided, applicable to a first terminal. The method includes: sending, by a first terminal, description information of a target application to a second terminal; receiving response information sent by the second terminal, where the response information is determined by the second terminal based on the description information of the target application; and determining, based on the response information, whether to communicate with the second terminal through the target application.

According to a second aspect, a communication apparatus is provided. The communication apparatus includes: a sending module, where the sending module is configured to send description information of a target application to a second terminal; a receiving module, where the receiving module is configured to receive response information sent by the second terminal, where the response information is determined by the second terminal based on the description information of the target application; and a determining module, where the determining module is configured to determine, based on the response information received by the receiving module, whether to communicate with the second terminal through the target application.

According to a third aspect, a communication method is provided, applicable to a second terminal. The method includes: receiving, by the second terminal, description information of a target application sent by a first terminal; determining response information based on the description information of the target application, where the response information is used by the first terminal to determine whether to communicate with the second terminal through the target application; and sending the response information to the first terminal.

According to a fourth aspect, a communication apparatus is provided. The communication apparatus includes: a receiving module, where the receiving module is configured to receive description information of a target application sent by a first terminal; a determining module, where the determining module is configured to determine response information based on the description information of the target application received by the receiving module, where the response information is used by the first terminal to determine whether to communicate with the communication apparatus through the target application; and a sending module, where the sending module is configured to send the response information determined by the determining module to the first terminal.

According to a fifth aspect, a communication method is provided, applied to a target data channel server. The method includes: receiving, by the target data channel server through a first bootstrap bootstrap data channel, a second message sent by a first terminal, where the second message includes description information of a target application; determining a second terminal; and sending a fourth message to the second terminal through a second bootstrap data channel, where the fourth message includes the description information of the target application, where the description information of the target application is used by the second terminal to determine response information, and the response information is used by the first terminal to determine whether to communicate with the second terminal through the target application.

According to a sixth aspect, a communication apparatus is provided. The communication apparatus includes: a receiving module, where the receiving module is configured to receive, through a first bootstrap data channel, a second message sent by a first terminal, where the second message includes description information of a target application; a determining module, where the determining module is configured to determine a second terminal; and a sending module, where the sending module is configured to send, through a second bootstrap data channel, a fourth message to the second terminal determined by the determining module, where the fourth message includes the description information of the target application, where the description information of the target application is used by the second terminal to determine response information, and the response information is used by the first terminal to determine whether to communicate with the second terminal through the target application.

According to a seventh aspect, a terminal is provided. The terminal includes a processor and a memory, the memory stores a program or an instruction executable on the processor, and when the program or instruction is executed by the processor, steps of the method according to the first aspect are implemented.

According to an eighth aspect, a terminal is provided, including a processor and a communication interface. The communication interface is configured to send description information of a target application to a second terminal, and receive response information sent by the second terminal, where the response information is determined by the second terminal based on the description information of the target application. The processor is configured to determine, based on the response information, whether to communicate with the second terminal through the target application.

According to a ninth aspect, a terminal is provided. The terminal includes a processor and a memory, the memory stores a program or an instruction executable on the processor, and when the program or instruction is executed by the processor, steps of the method according to the third aspect are implemented.

According to a tenth aspect, a terminal is provided, including a processor and a communication interface. The communication interface is configured to receive description information of a target application sent by a first terminal. The processor is configured to determine response information based on the description information of the target application, where the response information is used by a first terminal to determine whether to communicate with the terminal through the target application. The communication interface is further configured to send the response information to the first terminal.

According to an eleventh aspect, a network side device is provided, including a processor and a memory, where the memory stores a program or an instruction executable on the processor, and when the program or the instruction is executed by the processor, steps of the method according to the fifth aspect are implemented.

According to a twelfth aspect, a network side device is provided, including a processor and a communication interface. The communication interface is configured to receive, through a first bootstrap data channel, a second message sent by a first terminal, where the second message includes description information of a target application. The processor is configured to determine a second terminal. The communication interface is further configured to send a fourth message to the second terminal through a second bootstrap data channel, where the fourth message includes the description information of the target application, where the description information of the target application is used by the second terminal to determine response information, and the response information is used by the first terminal to determine whether to communicate with the second terminal through the target application.

According to a thirteenth aspect, a communication system is provided, including: a terminal and a network side device. The terminal can be configured to perform steps of the method according to the first aspect or steps of the method according to the third aspect, and the network side device can be configured to perform steps of the method according to the fifth aspect.

According to a fourteenth aspect, a readable storage medium is provided, where the readable storage medium stores a program or an instruction, and when the program or the instruction is executed by a processor, steps of the method according to the first aspect are implemented, or steps of the method according to the third aspect are implemented, or steps of the method according to the fifth aspect are implemented.

According to a fifteenth aspect, a chip is provided, including a processor and a communication interface. The communication interface is coupled to the processor, and the processor is configured to run a program or an instruction, so as to implement steps of the method according to the first aspect, or steps of the method according to the third aspect, or steps of the method according to the fifth aspect.

According to a sixteenth aspect, a computer program/program product is provided, stored in a storage medium. The program/program product is executed by at least one processor to implement steps of the method according to the first aspect, or steps of the method according to the third aspect, or steps of the method according to the fifth aspect.

In the embodiments of the present application, the first terminal can send the description information of the target application to the second terminal, and receive the response information sent by the second terminal and determined by the second terminal based on the description information of the target application, so that the first terminal can determine, based on the response information, whether to communicate with the second terminal through the target application. Instead of directly communicating with the second terminal through the target application, the first terminal can first send the description information of the target application to the second terminal, and determine, based on the response information, whether to communicate with the second terminal through the target application. Therefore, privacy leakage of the user of the second terminal can be avoided, thus improving the security of the terminal.

### BRIEF DESCRIPTION OF THE DRAWINGS

FIG. 1 is a schematic flowchart of establishing a bootstrap data channel in related technologies;
FIG. 2 is a schematic flowchart of establishing a data channel corresponding to an application in related technologies;
FIG. 3 is a block diagram of a wireless communication system according to an embodiment of the present application;
FIG. 4 is a schematic flowchart 1 of a communication method according to an embodiment of the present application;
FIG. 5 is a schematic flowchart 2 of a communication method according to an embodiment of the present application;
FIG. 6 is a schematic flowchart 3 of a communication method according to an embodiment of the present application;
FIG. 7 is a schematic flowchart 4 of a communication method according to an embodiment of the present application;
FIG. 8 is a schematic flowchart 5 of a communication method according to an embodiment of the present application;
FIG. 9 is a schematic flowchart 6 of a communication method according to an embodiment of the present application;
FIG. 10 is a schematic flowchart 7 of a communication method according to an embodiment of the present application;
FIG. 11 is a schematic flowchart 8 of a communication method according to an embodiment of the present application;
FIG. 12 is a schematic flowchart 9 of a communication method according to an embodiment of the present application;
FIG. 13 is a schematic flowchart 10 of a communication method according to an embodiment of the present application;
FIG. 14 is a schematic flowchart 11 of a communication method according to an embodiment of the present application;
FIG. 15 is a schematic flowchart 12 of a communication method according to an embodiment of the present application;
FIG. 16 is a structural schematic diagram 1 of a communication apparatus according to an embodiment of the present application;
FIG. 17 is a structural schematic diagram 2 of a communication apparatus according to an embodiment of the present application;
FIG. 18 is a structural schematic diagram 3 of a communication apparatus according to an embodiment of the present application;
FIG. 19 is a schematic structural diagram of a communication device according to an embodiment of this application;
FIG. 20 is a schematic diagram of a hardware structure of a terminal according to an embodiment of the present application; and
FIG. 21 is a schematic diagram of a hardware structure of a network side device according to an embodiment of this application.

### DETAILED DESCRIPTION

The following clearly describes the technical solutions in the embodiments of this application with reference to the accompanying drawings in the embodiments of this application. Obviously, the described embodiments are some but not all of the embodiments of this application. All other embodiments obtained by persons of ordinary skill in the art based on the embodiments of this application shall fall within the scope of protection of this application.

Some terms involved in the embodiments of this application are described below.

### 1. Establish a bootstrap DC.

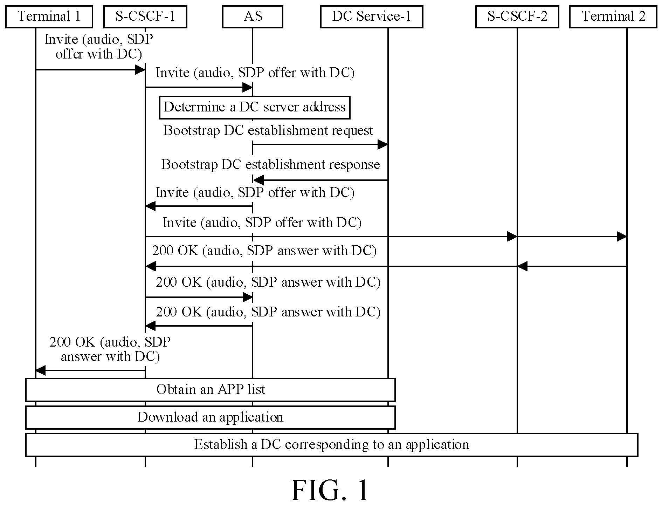

As shown in FIG. 1, a terminal 1 can initiate a call request to a terminal 2 through a session initiation protocol (Session Initiation Protocol, SIP) request invite message. The SIP invite message includes voice description information and DC description information. The SIP invite message is routed to a serving call session control function (Serving Call Session Control Function, S-CSCF)-1 entity that provides a service to the terminal 1, so that the S-CSCF-1 entity can route the SIP invite message to an application server (Application Server, AS) that provides a service to the terminal 1. Then, the AS can determine, based on the voice description information and the DC description information, to establish a bootstrap DC by using a DC service that provides a service to the terminal 1, determine an address of the DC service, and send a bootstrap DC establishment request to the DC service, so that the DC service can send a DC establishment response to the AS. The DC establishment response includes session description protocol (Session Description Protocol, SDP) information sent to the terminal 2. In this way, the AS can send an invite message to the S-CSCF-1 entity, where the invite message includes information for establishing a bootstrap DC, so that the S-CSCF-1 entity can send, based on an address of the terminal 2, the invite message to the S-CSCF-2 entity that provides a service to the terminal 2. In this way, the terminal 2 can receive the invite message and return a 200 ok message to the S-CSCF-1 entity through the S-CSCF-2 entity. The 200 ok message includes an SDP answer, and the SDP answer includes information for establishing the bootstrap DC. In this way, the S-CSCF-1 entity can send the SDP answer to the DC service through the AS, thereby establishing a bootstrap DC between the DC service and the terminal 2. Besides, the S-CSCF-1 entity can send the SDP answer to the terminal 1, thereby establishing a bootstrap DC between the DC service and the terminal 1.

After the bootstrap DC between the DC service and the terminal 1 is established, the terminal 1 can obtain an APP list from the DC service, so that the terminal 1 can download an application from the APP list.

After the bootstrap DC between the DC service and the terminal 2 is established, the terminal 2 can obtain an APP list from the DC service, so that the terminal 2 can download an application from the APP list.

In this way, the terminal 1 can establish a DC corresponding to the application.

### 2. Establish a DC corresponding to an application.

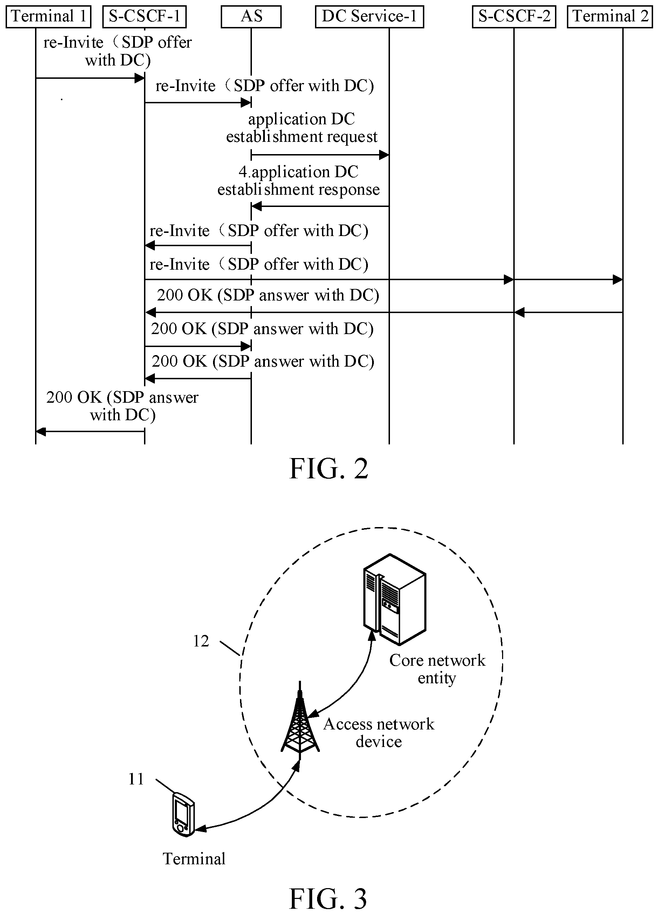

As shown in FIG. 2, the terminal 1 can initiate, through a SIP re-invite message, a request to the terminal 2 to establish a DC corresponding to an application, so that the S-CSCF-1 entity can route the SIP re-invite message to the AS. Then, the AS can send, to the DC service, a request for establishing the DC corresponding to the application, such as an application DC establishment request, so that the DC service can send an application DC establishment response to the AS. The application DC establishment response includes an establishment policy of the DC corresponding to the application. Then, the AS can send an invite message to the S-CSCF-1 entity, where the invite message includes information sent to the terminal 2 to establish the DC corresponding to the application, so that the S-CSCF-1 entity can send the invite message to the S-CSCF-2 entity according to the address of the terminal 2, and then the terminal 2 can receive the invite message and return a 200 ok message to the S-CSCF-1 entity through the S-CSCF-2 entity. The 200 ok message includes an SDP answer, and the SDP answer includes information for establishing the DC corresponding to the application. In this way, the S-CSCF-1 entity can send the SDP answer to the AS, and send the SDP answer to the terminal 1. Then, the terminal 1 can establish the DC of the application with the terminal 2.

### 3. Other terms.

In the specification and claims of this application, the terms such as "first" and "second" are used for distinguishing similar objects, and are not necessarily used to describe a particular order or sequence. It is to be understood that the terms so used are interchangeable under appropriate circumstances such that the embodiments of this application can be implemented in sequences other than those illustrated or described herein, and "first" and "second" generally distinguish objects of a same type, and the number of objects is not limited. For example, there may be one or more first objects. In addition, in the specification and claims, "and/or" means at least one of connected objects, and the character "/" generally means that associated objects are in an "or" relationship.

It should be noted that the technology described in the embodiments of this application is not limited to a long term evolution (Long Term Evolution, LTE)/LTE-advanced (LTE-Advanced, LTE-A) system, and may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and another system. The terms "system" and "network" in the embodiments of this application are often used interchangeably, and the described technology can be used not only for the systems and radio technologies mentioned above, but also for other systems and radio technologies. However, a new radio (New Radio, NR) system is described in the following description for illustrative purposes, and the NR terminology is used in most of the following description, although these technologies can also be applied to applications other than the NR system application, such as the 6^{th} generation (6^{th} Generation, 6G) communication system.

FIG. 3 is a block diagram of a wireless communication system to which an embodiment of the present application is applicable. The wireless communication system includes a terminal 11 and a network side device 12. The terminal 11 may be a mobile phone, a tablet personal computer (Tablet Personal Computer), a laptop computer (Laptop Computer) or a notebook computer, a personal digital Assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), a pedestrian terminal (PUE), a smart home appliance (home equipments with a wireless communication function, such as a refrigerator, a TV, a washing machine or a furniture), and terminal side equipments such as a game console, a personal computer (personal computer, PC), an ATM or a self-service machine. The wearable device includes: smart watches, smart bracelets, smart headphones, smart glasses, smart jewelry (smart bracelets, smart rings, smart necklaces, smart anklets, or the like), smart wristbands, smart clothing, or the like. It should be noted that the specific type of the terminal 11 is not limited in the embodiments of the present application. In addition to the above terminal devices, the terminal can also be a chip within a terminal, such as a modem (Modem) chip or a system on chip (System on Chip, SoC). The network side device 12 may include an access network device or a core network entity, where the access network device 12 may also be called a radio access network device, a radio access network (Radio Access Network, RAN), a radio access network function or a radio access network unit. The access network device 12 may include a base station, a WLAN access point, a WiFi node, or the like. The base station may be referred to as a node B, an evolved node B (eNB), an access point, a base transceiver station (Base Transceiver Station, BTS), a radio base station, a radio transceiver, a basic service set (Basic Service Set, BSS), an extended service set (Extended Service Set, ESS), a home node B, a home evolved node B, a transmitting receiving point (Transmitting Receiving Point, TRP), or other appropriate terms in the art. As long as a same technical effect is achieved, the base station is not limited to a specified technical term. It should be noted that, in embodiments of the present application, only a base station in the NR system is used as an example, but a specific type of the base station is not limited. The core network entity may include but is not limited to at least one of the following: core network nodes, core network functions, mobility management entities (Mobility Management Entity, MME), access and mobility management functions (Access and Mobility Management Function, AMF), session management functions (Session Management Function, SMF), user plane functions (User Plane Function, UPF), policy control functions (Policy Control Function, PCF), policy and charging rules functions (Policy and Charging Rules Function, PCRF), edge application server discovery functions (Edge Application Server Discovery Function, EASDF), unified data management (Unified Data Management, UDM), unified data repository (Unified Data Repository, UDR), home subscriber servers (Home Subscriber Server, HSS), centralized network configuration (Centralized network configuration, CNC), network repository functions (Network Repository Function, NRF), network exposure functions (Network Exposure Function, NEF), local NEFs (Local NEF, or L-NEF), binding support functions (Binding Support Function, BSF), application functions (Application Function, AF), or the like. It should be noted that in the embodiments of the present application, only the core network entity in the NR system is used as an example for introduction, and the specific type of the core network entity is not limited.

The communication method and apparatus, the terminal, the network side device, and the medium provided by the embodiments of the present application will be described in detail below with reference to the accompanying drawings through some embodiments and application scenarios.

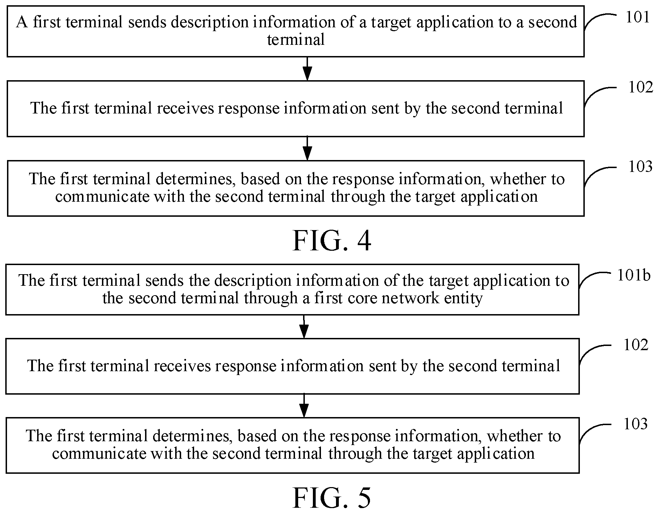

FIG. 4 is a flowchart of a communication method according to an embodiment of the present application. As shown in FIG. 4, the communication method provided by this embodiment of the present application may include the following step 101 to step 103.

Step 101: A first terminal sends description information of a target application to a second terminal.

Optionally, in this embodiment of the present application, step 101 may be specifically implemented by using the following step 101a.

Step 101a: In a case that a call connection is established between the first terminal and the second terminal, the first terminal sends the description information of the target application to the second terminal.

Optionally, in this embodiment of the present application, the first terminal can display an application list according to an input on the first terminal by a user. The application list includes an application identifier (for example, an application icon) of at least one application. In this way, the first terminal can send the description information of the target application to the second terminal based on a click input on an application identifier of a target application of the at least one application by the user.

Further optionally, in this embodiment of the present application, the first terminal can directly obtain the description information of the target application from the first terminal according to the click input on the application identifier of the target application by the user, or directly download the description information of the target application from a core network entity.

Optionally, in this embodiment of the present application, the description information of the target application includes at least one of the following: identification information of the target application, attribute information of the target application, and type information of the target application.

The identification information of the target application may include an identity (Identity, ID) of the target application, a name (name) of the application, a fully qualified domain name (Fully Qualified Domain Name, FQDN) of the application, or the like. The attribute information of the target application may include a name of the target application, a developer of the target application, a permission required by the target application (for example, a permission such as a location, storage, or an address book), or the like. The type information of the target application may include any one of the following: a message class, an augmented reality (Augmented Reality, AR) class, a location class, a sharing class, a file transfer class, and the like.

Optionally, the target application includes one or more applications, such as one or more data channel applications (Data Channel Application, DC APP). An example is as follows.

The application list includes 5 applications: DC APP-1, DC APP-2, DC APP-3, DC APP-4, and DC APP-5.

The user selects 3 of the applications: DC APP-1, DC APP-2, and DC APP-3.

The first terminal can send description information corresponding to the 3 applications to the second terminal according to user selection. In this case, the description can be sent to the second terminal in the form of an array or a list (list). For example, an application identifier is sent. The description information of the target application sent by the first terminal is:
array: [DC APP-1 ID, DC APP-2 ID, DC APP-3 ID]; or
list: {DC APP-1 ID, DC APP-2 ID, DC APP-3 ID}.

Optionally, in this embodiment of the present application, the first terminal may send a message to the second terminal through the core network entity, where the message includes description information of the target application.

The first terminal may send the message to the second terminal through the core network entity through direct transmission or indirect transmission, for example:
direct transmission: The first terminal sends the first message to the core network entity so that the core network entity can forward the first message to the second terminal.
indirect transmission: The first terminal sends the first message to the core network entity, so that the core network entity can generate a second message and send the second message to the second terminal, where the second message includes application description information. That the first terminal sends the first message to the core network entity can be understood as that when the first terminal sends a message to the second terminal, the core network entity receives the first message. In this case, a destination address of the first message is the second terminal or the core network entity.

The core network entity may include any one of the following: an S-CSCF-1 that provides a service to the first terminal, a DC Server-1 that provides a service to the first terminal, a DC Server-2 that provides a service to the second terminal, an AS-1 that provides a service to the first terminal, and an AS-2 that provides a service to the second terminal.

The DC Server can be further subdivided into two entities.

DC control entity: A DC control entity is an entity used to control a DC, and can also be a data channel service control (Data Channel Service Control, DCS-C) plane entity, a data channel server (Data Channel Server, DChS), a data channel control function (Data Channel Control Function, DCCF), a data channel signaling function (Data Channel Signaling Function, DCSF), and the like.

DC media entity: A DC media entity is an entity used to provide a transmission function for a data channel, and can also be called a data channel service media (Data Channel Service Media, DCS-M), a data channel media function (Data Channel Media Function, DCMF), a multimedia resource function controller (Multimedia Resource Function Controller, MRFC), a multimedia resource function processor (Multimedia Resource Function Processor, MRFP), and the like.

The DC control entity and the DC media entity may also be other network elements with the same function or the same type, which are not limited in the embodiments of this application.

The message can be used for at least one of the following: negotiating an application corresponding to a to-be-established data channel, negotiating an application used during a call, requesting to establish a data channel, and requesting to download the target application.

If the message is used for negotiating an application corresponding to a to-be-established data channel (and/or negotiating an application used during a call), it can be considered that the first terminal can first negotiate one or more used applications (that is, the target application) with the second terminal before initiating establishment of a data channel corresponding to the target application, to determine whether to communicate with the second terminal through the target application. If the message is used for requesting to establish a data channel, it can be considered that the first terminal can negotiate one or more used applications with the second terminal before initiating establishment of a data channel corresponding to the target application, to determine whether to communicate with the second terminal through the target application.

If the message is used for requesting to download the target application, it can be considered that the first terminal can negotiate one or more used applications with the second terminal when initiating download of the target application, to determine whether to communicate with the second terminal through the target application. This specifically includes: initiating, by the first terminal, a target application download request to the core network entity, and pushing, by the core network entity, the description information of the target application to the second terminal, so that the second terminal can determine whether to accept to communicate with the first terminal through the target application.

It should be noted that the "data channel corresponding to the target application" can be understood as: a data channel used to transmit the service of the target application.

Optionally, in this embodiment of the present application, the sending, by a first terminal, description information of a target application to a second terminal includes: sending, by the first terminal, a SIP message to the second terminal, where a SIP message header of the SIP message carries the description information of the target application, or an SDP of the SIP message carries the description information of the target application. That the first terminal sends a SIP message to the second terminal can be understood as that the first terminal directly sends the SIP message to the second terminal.

Step 102: The first terminal receives response information sent by the second terminal.

In this embodiment of the present application, the response information is determined by the second terminal based on the description information of the target application.

Optionally, in this embodiment of the present application, the first terminal may receive, through the core network entity, a fifth message sent by the second terminal, where the fifth message includes the response information.

The fifth message can be any one of the following: 180, 183, 200 ok, 4XY, and 5XY. X and Y represent any integers from 0 to 9.

The response information may include any one of the following: confirmation information and denial information.

Step 103: The first terminal determines, based on the response information, whether to communicate with the second terminal through the target application.

In this embodiment of this application, the "communicating with the second terminal through the target application" can be understood as: performing information transfer, information interaction, data transfer, or data interaction with the second terminal through the target application. The "communicating with the second terminal through the target application" can also be understood as: using the target application during communication between the first terminal and the second terminal.

In this embodiment of the present application, the first terminal may determine, based on the response information, whether the second terminal wants to communicate with the first terminal through the target application. Therefore, the first terminal can determine whether to initiate the establishment of the data channel corresponding to the target application, or determine whether to continue the establishment of the data channel corresponding to the target application.

It can be understood that if the second terminal wants to communicate with the first terminal through the target application, the first terminal can initiate the establishment of the data channel corresponding to the target application (or continue the establishment of the data channel corresponding to the target application). If the second terminal does not want to communicate with the first terminal through the target application, the first terminal may not initiate the establishment of the data channel corresponding to the target application (or stop the establishment of the data channel corresponding to the target application).

Optionally, if the description information of the target application sent by the first terminal includes description information corresponding to at least two applications, the second terminal may choose to accept to communicate with the first terminal through some of the applications, and send, to the first terminal through a response message, description information of the applications that can be used for communication. For example:
the description information of target application sent by the first terminal includes description information of 3 applications: DC APP-1 ID, DC APP-2 ID, and DC APP-3 ID.
the second terminal accepts 2 of these applications: DC APP-1 and DC APP-2.
the second terminal sends description information of the accepted target applications to the first terminal through a response message: DC APP-1 ID and DC APP-2 ID.
the first terminal and the second terminal communicate through the accepted target applications.

If the first terminal and the second terminal have downloaded APPs corresponding to DC APP-1 ID and DC APP-2 ID, the first terminal and the second terminal can directly use the APPs to initiate the establishment process of data channels of the applications. If the first terminal or the second terminal has not downloaded the APPs corresponding to DC APP-1 ID and DC APP-2 ID, the corresponding APPs are downloaded, for example, downloaded according to the APP IDs, or downloaded according to the correspondence between the APP IDs and data channel servers.

Optionally, in this embodiment of the present application, step 103 may be specifically implemented by using the following step 103a or step 103b.

Step 103a: In a case that the response information is confirmation information, the first terminal determines to communicate with the second terminal through the target application.

In this embodiment of the present application, if the response information is confirmation information, it can be considered that the user of the second terminal wants to communicate with the first terminal through the target application. Therefore, the first terminal can determine to establish a data channel corresponding to the target application with the second terminal (or continue to establish the data channel corresponding to the target application). If the target application sent by the first terminal includes description information corresponding to at least two applications, the second terminal may choose to accept to communicate with the first terminal through some of the applications.

Optionally, in this embodiment of the present application, after the first terminal determines to communicate with the second terminal through the target application, the first terminal may send, to the second terminal through a SIP re-invite message, a request for establishing the data channel corresponding to the target application, to perform the establishment process of the data channel corresponding to the target application. Alternatively, the first terminal may continue to perform the establishment process of the data channel corresponding to the target application.

As can be seen, the first terminal communicates with the second terminal through the target application only when the user of the second terminal wants the second terminal to communicate with the first terminal through the target application. Therefore, privacy leakage of the user of the second terminal can be avoided.

Step 103b: In a case that the response information is denial information, the first terminal determines not to communicate with the second terminal through the target application.

In this embodiment of the present application, if the response information is denial information, it can be considered that the user of the second terminal does not want the second terminal to communicate with the first terminal through the target application. Therefore, the first terminal may not establish the data channel corresponding to the target application with the second terminal (or stop establishing the data channel corresponding to the target application). If the target application sent by the first terminal includes description information corresponding to at least one application, the denial information represents that the second terminal chooses to reject to communicate with the first terminal through all applications.

As can be seen, the first terminal does not communicate with the second terminal through the target application when the user of the second terminal does not want the second terminal to communicate with the first terminal through the target application. Therefore, this can avoid that the user of the second terminal cannot block the usage of the target application in time.

Optionally, in this embodiment of the present application, after step 103, the communication method provided in this embodiment of the present application may further include the following step 201 or step 202.

Step 201: In a case that the first terminal determines to communicate with the second terminal through the target application, the first terminal performs a first operation.

In this embodiment of the present application, the first operation includes at least one of the following: marking the target application as being available, establishing a data channel corresponding to the target application with the second terminal, and downloading the target application.

After the first terminal marks the target application as being available, the first terminal can communicate with the second terminal through the target application.

In a case that the first terminal has not downloaded the target application, the first operation may include downloading the target application. If the target application includes multiple applications, and some applications have been downloaded and some have not been downloaded, only the applications not downloaded are downloaded.

Specifically, the first terminal may download the target application from a data channel server corresponding to the target application (for example, a target data channel server in the following embodiments).

Further optionally, in this embodiment of the present application, the first terminal can download, through a bootstrap data channel, the target application from the data channel server corresponding to the target application.

As can be seen, when determining to communicate with the second terminal through the target application, the first terminal can directly perform at least one operation of marking the target application as being available, establishing the data channel corresponding to the target application with the second terminal, and downloading the target application. There is no need for the user to perform multiple operations. Therefore, user operations can be simplified, thus improving user experience.

When the first operation performed by the first terminal is "establishing the data channel corresponding to the target application with the second terminal", the establishing, by the first terminal, the data channel corresponding to the target application with the second terminal includes: sending, by the first terminal, a SIP message to the second terminal, where a SIP message header of the SIP message carries the description information of the target application, or an SDP of the SIP message carries the description information of the target application.

In this embodiment of the present application, the SIP message header may be a P-preferred-service message header of the SIP message, and the P-preferred-service message header of the SIP message carries the description information of the target application, or a row a of the SDP carries the description information of the target application.

Step 202: In a case that the first terminal determines not to communicate with the second terminal through the target application, the first terminal performs a second operation.

In this embodiment of the present application, the second operation includes at least one of the following: marking the target application as being unavailable and deleting the downloaded target application.

After the first terminal marks the target application as being unavailable, the first terminal cannot communicate with the second terminal through the target application.

In a case that the first terminal has downloaded the target application, the second operation may include deleting the downloaded target application.

As can be seen, when determining not to communicate with the second terminal through the target application, the first terminal can directly perform at least one operation of marking the target application as being unavailable and deleting the downloaded target application. There is no need for the user to perform multiple operations. Therefore, user operations can be simplified, thus improving user experience.

According to the communication method provided in the embodiments of the present application, the first terminal can send the description information of the target application to the second terminal, and receive the response information sent by the second terminal and determined by the second terminal based on the description information of the target application, so that the first terminal can determine, based on the response information, whether to communicate with the second terminal through the target application. Instead of directly communicating with the second terminal through the target application, the first terminal can first send the description information of the target application to the second terminal, and determine, based on the response information, whether to communicate with the second terminal through the target application. Therefore, privacy leakage of the user of the second terminal can be avoided, thus improving the security of the terminal.

Moreover, in related technologies, the establishment process of the data channel corresponding to the application involves negotiation of quality of service (Quality of Service, QoS) parameters (for example, a bandwidth, a delay, and a packet loss rate), and the second terminal may not be able to determine an application that the first terminal wants to start. However, in this embodiment of the present application, since the first terminal can send the description information of the target application to the second terminal, the second terminal can determine the application (that is, the target application) that the first terminal wants to start. In this way, this can avoid that the second terminal cannot start the target application.

Different examples will be used below to illustrate how the first terminal sends the description information of the target application to the second terminal.

Example one:
optionally, in an embodiment of the present application, with reference to FIG. 4, as shown in FIG. 5, step 101 may be specifically implemented by the following step 101b.

Step 101b: The first terminal sends the description information of the target application to the second terminal through a first core network entity.

Further optionally, in this embodiment of the present application, the first core network entity may specifically be: an S-CSCF-1 that provides a service to the first terminal.

Optionally, in this embodiment of the present application, step 101b may be specifically implemented by using the following step 101b1.

Step 101b1: The first terminal sends a first message to the first core network entity, so that the first core network entity sends the description information of the target application to the second terminal based on the first message.

The first core network entity can directly forward the first message to the second terminal, or can generate a new message based on the first message and send the new message to the second terminal, where the new message includes the description information of the target application.

In this embodiment of the present application, the first message includes the description information of the target application; and the first message is used for at least one of the following: negotiating an application corresponding to a to-be-established data channel, negotiating an application used during a call, requesting to establish a data channel, and requesting to download the target application.

The "application corresponding to the to-be-established data channel" can be understood as: the target application. The "application used during a call" can be understood as: the target application. The "requesting to establish a data channel" can be understood as: requesting to establish the data channel corresponding to the target application.

Optionally, in this embodiment of the present application, the first message is a SIP message. A SIP message header of the SIP message carries the description information of the target application, or an SDP of the SIP message carries the description information of the target application.

Optionally, in this embodiment of the present application, a P-preferred-service message header of the SIP message carries the description information of the target application, or a row a of the SDP carries the description information of the target application.

For example, in a case that the P-preferred-service message header of the SIP message carries the description information of the target application, the P-preferred-service message header may carry:
g.3gpp.icsi-ref="urn%3Aurn-7%3A3gpp-service.ims.icsi.datachannel.xxx.

xxx represents an ID, a name, or an FQDN of the application.

Optionally, in this embodiment of the present application, the first message further includes information about a target data channel server, the target data channel server corresponds to the target application, and the information about the target data channel server is used by the second terminal to determine the target data channel server. If the target application includes multiple applications, each application corresponds to one g.3gpp.icsi-ref.

That "the target data channel server corresponds to the target application" can be understood as: the target application is stored in the data channel server or the target data channel server provides a download service for the target application.

The information about the target data channel server may include at least one of the following: an internet protocol (IP) address, a fully qualified domain name (Fully Qualified Domain Name, FQDN), and a website address. The information about the target data channel server is used to address to the target data channel server.

For another example, when the SDP of the SIP message carries the description information of the target application, an additional row a can be added to the SDP:
a=dcmap:7216 app id=xxx;Source=yyy
a=dcmap:7216 app attribute=zzz;Source=yyy.

xxx represents an ID, a name, or an FQDN of the application. yyy represents the information about the target data channel server corresponding to the application. zzz represents an attribute or a type of the application.

If the target application includes multiple applications, each application corresponds to a row a.

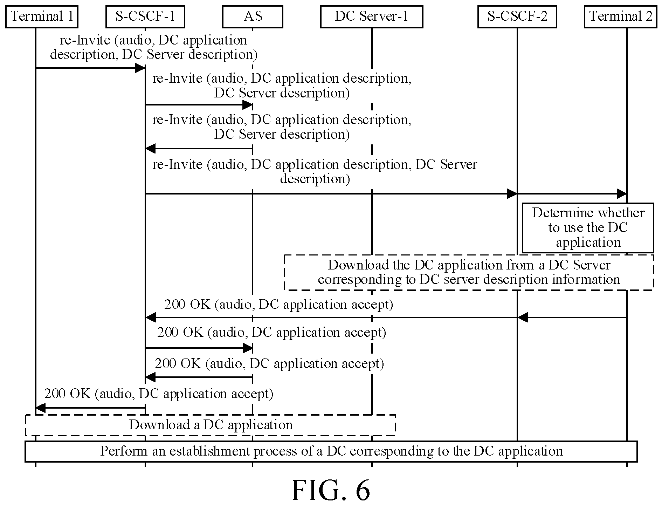

For example, the first message is used for negotiating the application corresponding to the to-be-established data channel (and/or negotiating the application used during the call process). As shown in FIG. 6, the first terminal may send, to the first core network entity (for example, the S-CSCF-1) through a re-invite message, a negotiation request for establishing the data channel corresponding to the target application, where the negotiation request includes the description information of the target application (for example, DC application description) and the information about the target data channel server (for example, DC server description), so that the S-CSCF-1 can send the re-invite message to an AS. Then, the AS can return the re-invite message to the S-CSCF-1, so that the S-CSCF-1 can send the re-invite message to the S-CSCF-2, and the S-CSCF-2 can send the re-invite message to the second terminal. In this way, in a case that the second terminal determines to use the target application (that is, a DC application), the second terminal can download the DC application from the corresponding DC server (that is, a DC server-1) according to the DC server description, and send response information (for example, 200 ok) to the S-CSCF-2, so that the S-CSCF-2 can send 200 ok to the S-CSCF-1. Then, the S-CSCF-1 can send 200 ok to the AS, so that the AS can return 200 ok to the S-CSCF-1. Then, the S-CSCF-1 can send 200 ok to the first terminal, so that the first terminal can determine to communicate with the second terminal through the target application, download the DC application from the DC server-1 when the DC application is not downloaded, and then perform the establishment process of the data channel corresponding to the DC application.

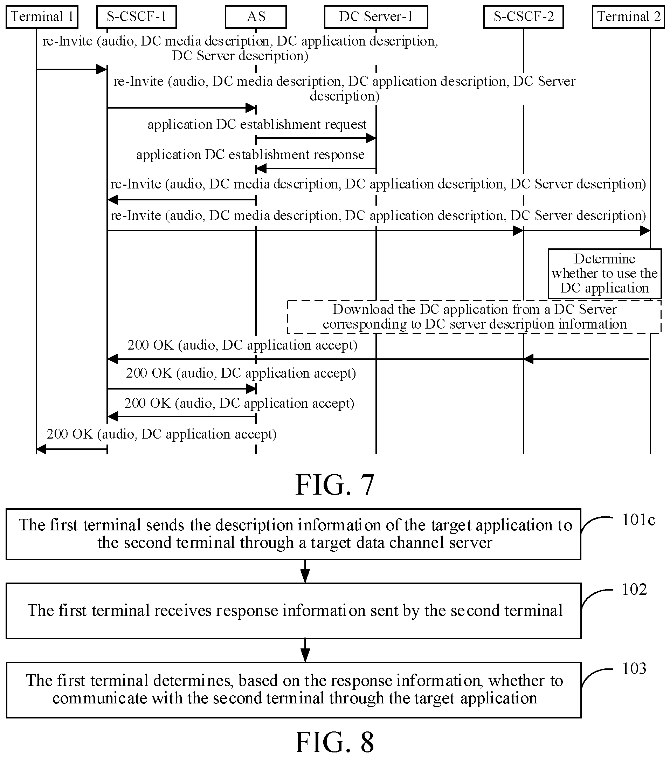

For another example, the first message is used for requesting to establish a data channel. As shown in FIG. 7, the first terminal may send, to the first core network entity (for example, the S-CSCF-1) through a re-invite message, a request for establishing the data channel corresponding to the target application, where the request includes the description information of the target application (for example, DC application description) and the information about the target data channel server (for example, DC server description), so that the S-CSCF-1 can send the re-invite message to an AS. Then, the AS can send an application DC establishment request to the DC server-1, so that the DC server-1 can return an application DC establishment response to the AS, and the AS can send the re-invite message to the S-CSCF-1. Then, the S-CSCF-1 can send the re-invite message to the S-CSCF-2, so that the S-CSCF-2 can send the re-invite message to the second terminal. In this way, in a case that the second terminal determines to use the target application (that is, a DC application), the second terminal can download the DC application from the corresponding DC server (that is, a DC server-1) according to the DC server description, and send response information (for example, 200 ok) to the S-CSCF-2, so that the S-CSCF-2 can send 200 ok to the S-CSCF-1. Then, the S-CSCF-1 can send 200 ok to the AS, so that the AS can return 200 ok to the S-CSCF-1. Then, the S-CSCF-1 can send 200 ok to the first terminal, so that the first terminal can determine to communicate with the second terminal through the target application, and continue the establishment of the data channel corresponding to the DC application.

Example two:
optionally, in an embodiment of the present application, with reference to FIG. 4, as shown in FIG. 8, step 101 may be specifically implemented by the following step 101c.

Step 101c: The first terminal sends the description information of the target application to the second terminal through a target data channel server.

In this embodiment of the present application, the target data channel server corresponds to the target application.

Optionally, in this embodiment of the present application, step 101c may be specifically implemented by using the following step 101c1.

Step 101c1: The first terminal sends a second message to the target data channel server through a first bootstrap data channel, so that the target data channel server sends the description information of the target application to the second terminal based on the second message.

In this embodiment of the present application, the second message includes the description information of the target application. The second message is used for at least one of the following: negotiating an application corresponding to a to-be-established data channel, negotiating an application used during a call, requesting to establish a data channel, and requesting to download the target application.

Further optionally, in this embodiment of the present application, the second message may be: a hypertext transfer protocol (Hypertext Transfer Protocol, HTTP) message.

Optionally, in this embodiment of the present application, the second message further includes identification information of the second terminal, and the identification information of the second terminal is used by the target data channel server to send the description information of the target application to the second terminal.

The identification information of the second terminal may specifically be any one of the following: a uniform resource identifier (Uniform Resource Identifier, URI) of the second terminal, a mobile station ISDN international ISDN number (Mobile Station ISDN International ISDN Number, MSISDN), an identifier assigned by the target data channel server to the second terminal, a stream (stream) ID of a bootstrap DC between the first terminal and the target data channel server, a stream ID of a bootstrap DC between the second terminal and the target data channel server, and a stream ID of an application DC between the first terminal and the second terminal.

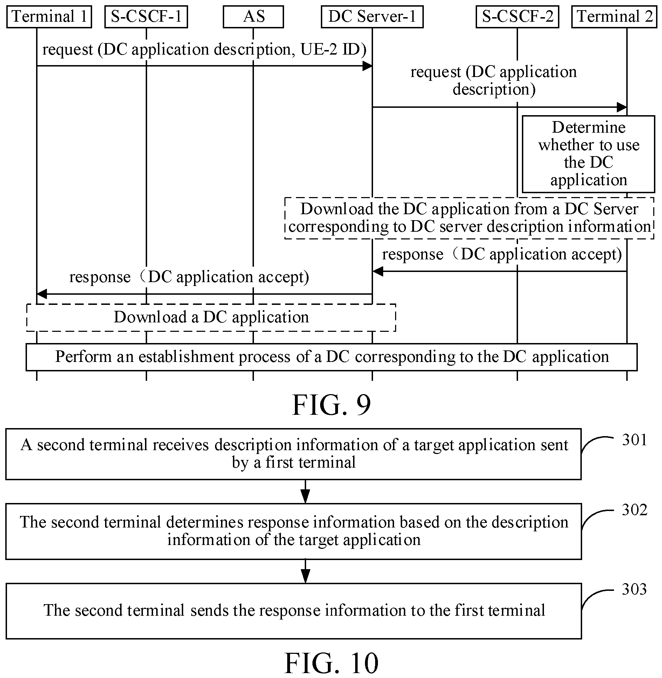

For example, the second message is used for negotiating the application corresponding to the to-be-established data channel (and/or negotiating the application used during the call process). As shown in FIG. 9, the first terminal can send a request to the target data channel server (for example, the DC server-1) through the first bootstrap data channel. The request includes the description information of the target application (for example, DC application description) and identification information of the second terminal, so that the DC server-1 can send the request to the second terminal based on the identification information of the second terminal. In this way, when the second terminal determines to use the target application (that is, a DC application), the second terminal can directly download the DC application from the DC server-1 and return a response message to the DC server-1, so that the DC server-1 can send the response message to the first terminal. Then, the first terminal can determine to communicate with the second terminal through the target application, download the DC application from the DC server-1 when the DC application is not downloaded, and then perform the establishment process of the data channel corresponding to the DC application. The establishment process of the data channel corresponding to the DC application is the same as that of the SIP message in step 101b1, and will not be described in detail again.

FIG. 10 is a flowchart of a communication method according to an embodiment of the present application. As shown in FIG. 10, the communication method provided by this embodiment of the present application may include the following step 301 to step 303.

Step 301: A second terminal receives description information of a target application sent by a first terminal.

Optionally, in this embodiment of the present application, when a call connection is established between the second terminal and the first terminal, the second terminal may receive the description information of the target application sent by the first terminal.

Optionally, in this embodiment of the present application, the description information of the target application includes at least one of the following: identification information of the target application, attribute information of the target application, and type information of the target application.

Optionally, the target application includes one or more applications, such as one or more data channel applications (Data Channel Application, DC APP). An example is as follows.

The application list includes 5 applications: DC APP-1, DC APP-2, DC APP-3, DC APP-4, and DC APP-5.

The user selects 3 of the applications: DC APP-1, DC APP-2, and DC APP-3.

The first terminal can send description information corresponding to the 3 applications to the second terminal according to user selection. In this case, the description can be sent to the second terminal in the form of an array or a list (list). For example, an application identifier is sent. The description information of the target application sent by the first terminal is:
array: [DC APP-1 ID, DC APP-2 ID, DC APP-3 ID]; or
list: {DC APP-1 ID, DC APP-2 ID, DC APP-3 ID}.

Optionally, in this embodiment of the present application, the second terminal may receive a request message from the first terminal through the core network entity, where the request message includes the description information of the target application. The request message may be the same as or different from the message sent by the first terminal to the core network entity.

It can be understood that in a case that the core network entity directly forwards the request message to the second terminal, the message may be the same as the message sent by the first terminal to the core network entity. In a case that the core network entity generates a new message based on the message sent by the first terminal to the core network entity, the request message may be different from the new message.

Optionally, the second terminal may directly receive a SIP message from the first terminal, where the SIP message carries the description information of the target application. For example, a message header of the SIP message may carry the description information of the target application, or an SDP of the SIP message may carry the description information of the target application.

Step 302: The second terminal determines response information based on the description information of the target application.

In this embodiment of the present application, the response information is used by the first terminal to determine whether to communicate with the second terminal through the target application.

The response information may include any one of the following: confirmation information and denial information.

In an example, description information of multiple applications is preset in the second terminal, so that the second terminal can determine response information based on whether target description information exists in the description information of the multiple applications. The target description information is: description information that matches (that is, is the same as) the description information of the target application.

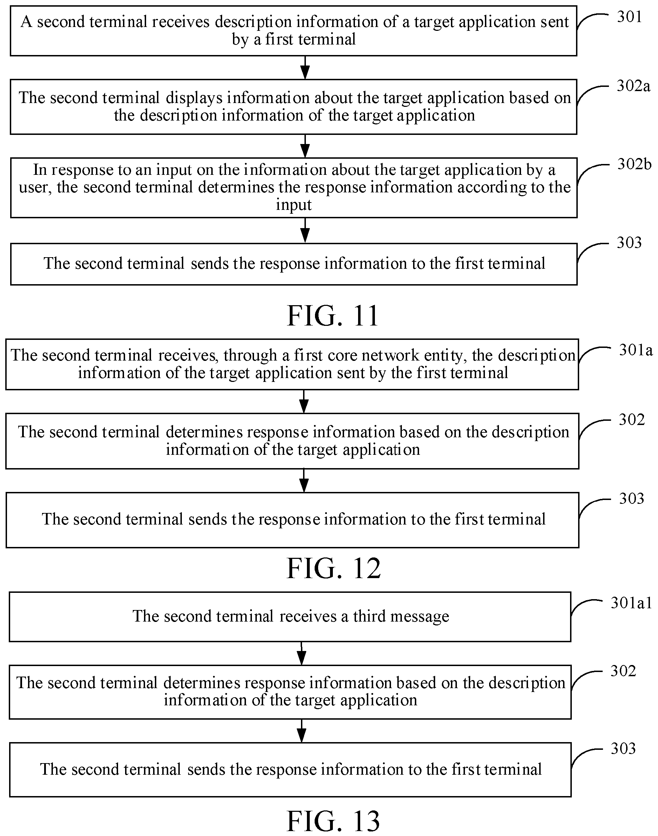

In another example, the second terminal can display relevant information of the target application based on the description information of the target application, and determine the response information according to a user input. Specifically, with reference to FIG. 10, as shown in FIG. 11, step 302 may be specifically implemented by using the following step 302a and step 302b.

Step 302a: The second terminal displays information about the target application based on the description information of the target application.

Further optionally, in this embodiment of the present application, the information about the target application may include at least one of the following: a name of the target application, an application type of the target application, and the like.

Further optionally, in this embodiment of the present application, the second terminal can also display an "accept" control and a "reject" control, so that the user can perform a click input on the "accept" control or the "reject" control according to usage requirements, to enter the information about the target application.

Step 302b: In response to an input on the information about the target application by a user, the second terminal determines the response information according to the input.

Further optionally, in this embodiment of the present application, the second terminal may perform a click input on the "accept" control or the "accept" control to determine the response information.

As can be seen, the user of the second terminal can input, according to the usage requirements, the information about the target application displayed by the second terminal, so that the second terminal can determine the response information used by the first terminal to determine whether to communicate with the second terminal through the target application. Therefore, privacy leakage of the user of the second terminal can be avoided.

Optionally, in this embodiment of the present application, step 302b may be specifically implemented by using the following step 302b1 or step 302b2.

Step 302b1: In a case that the input is a first input, the second terminal determines confirmation information corresponding to the first input as the response information.

Further optionally, in this embodiment of the present application, the first input may be specifically a click input on the "accept" control.

Step 302b1: In a case that the input is a second input, the second terminal determines denial information corresponding to the second input as the response information.

In this embodiment of the present application, the first input is different from the second input.

Further optionally, in this embodiment of the present application, the second input may be specifically a click input on the "reject" control.

Further optionally, in this embodiment of the present application, the second terminal may set a row a of the SDP in the received request message to 0 to obtain the denial information.

Step 303: The second terminal sends the response information to the first terminal.

Optionally, in this embodiment of the present application, the second terminal may send, through the core network entity, a fifth message to the first terminal, where the fifth message includes the response information.

The response message sent by the core network entity to the first terminal may be the same as or different from the fifth message. In a different case, the core network entity generates a new message based on the fifth message and sends the new message to the first terminal. The new message includes the response information.

The fifth message can be any one of the following: 180, 183, 200 ok, 4XY, and 5XY. X and Y represent any integers from 0 to 9.

Optionally, if the target application sent by the first terminal includes description information corresponding to at least two applications, the second terminal may choose to accept to communicate with the first terminal through some of the applications, and send, to the first terminal through a response message, description information of the applications that can be used for communication. An example is as follows.

The target application sent by the first terminal includes description information of 3 applications: DC APP-1 ID, DC APP-2 ID, and DC APP-3 ID.

The second terminal accepts 2 of these applications: DC APP-1 and DC APP-2.

The second terminal sends description information of the accepted target applications to the first terminal through a response message: DC APP-1 ID and DC APP-2 ID.

The first terminal and the second terminal communicate through the accepted target applications.

If the first terminal and the second terminal have downloaded APPs corresponding to DC APP-1 ID and DC APP-2 ID, the first terminal and the second terminal can directly use the APPs to initiate the establishment process of data channels of the applications. If the first terminal or the second terminal has not downloaded the APPs corresponding to DC APP-1 ID and DC APP-2 ID, the corresponding APPs are downloaded, for example, downloaded according to the APP IDs, or downloaded according to the correspondence between the APP IDs and data channel servers.

Optionally, in this embodiment of the present application, after step 303, the communication method provided in this embodiment of the present application may further include the following step 401 or step 402.

Step 401: In a case that the second terminal determines to communicate with the first terminal through the target application, the second terminal performs a third operation.

In this embodiment of the present application, the third operation includes at least one of the following: marking the target application as being available and downloading the target application.

As can be seen, when determining to communicate with the first terminal through the target application, the second terminal can directly perform at least one operation of marking the target application as being available and downloading the target application. There is no need for the user to perform multiple operations. Therefore, user operations can be simplified, thus improving user experience.

Step 402: In a case that the second terminal determines not to communicate with the first terminal through the target application, the second terminal performs a fourth operation.

In this embodiment of the present application, the fourth operation includes at least one of the following: marking the target application as being unavailable and deleting the downloaded target application.

As can be seen, when determining not to communicate with the first terminal through the target application, the second terminal can directly perform at least one operation of marking the target application as being unavailable and deleting the downloaded target application. There is no need for the user to perform multiple operations. Therefore, user operations can be simplified, thus improving user experience.

In the communication method provided by this embodiment of the present application, the second terminal can receive the description information of the target application from the first terminal, and determine, based on the description information of the target application, the response information used by the first terminal to determine whether to communicate with the second terminal through the target application, so that the second terminal can send the response information to the first terminal. Instead of directly communicating with the first terminal through the target application, the second terminal can determine the response information based on the description information of the target application, to determine whether the first terminal communicates with the second terminal through the target application. Therefore, privacy leakage of the user of the second terminal can be avoided, thus improving the security of the terminal.

Different examples will be used below to illustrate how the second terminal receives the description information of the target application from the first terminal.

Example three:
optionally, in an embodiment of the present application, with reference to FIG. 10, as shown in FIG. 12, step 301 may be specifically implemented by using the following step 301a.

Step 301a: The second terminal receives, through a first core network entity, the description information of the target application sent by the first terminal.

Optionally, in an embodiment of the present application, with reference to FIG. 12, as shown in FIG. 13, step 301a may be specifically implemented by using the following step 301a1.

Step 301a1: The second terminal receives a third message.

In this embodiment of the present application, the third message is sent by the first core network entity based on the first message sent by the first terminal, and the third message includes the description information of the target application. The first message is used for any one of the following: negotiating an application corresponding to a to-be-established data channel, negotiating an application used during a call, requesting to establish a data channel, and requesting to download the target application.

Further optionally, in this embodiment of this application, the third message may specifically be: a SIP message.

Optionally, in this embodiment of the present application, the third message further includes information about a target data channel server, and the target data channel server corresponds to the target application. Specifically, after step 301al, the communication method provided in this embodiment of the present application may further include the following step 501.

Step 501: In a case that the second terminal determines to communicate with the first terminal through the target application, if the second terminal has not downloaded the target application, the second terminal downloads the target application from the target data channel server based on the information about the target data channel server.

Further optionally, in a case that the response information is confirmation information, if the second terminal has not downloaded the target application, the second terminal downloads the target application from the target data channel server based on the information about the target data channel server. If the target application includes multiple applications, and some applications have been downloaded and some have not been downloaded, only the applications not downloaded are downloaded.

It should be noted that for the description of the second terminal downloading the target application, reference may be made to the specific descriptions in the above embodiments, which are not described in detail in this embodiment of this application.

As can be seen, in a case that the second terminal determines to communicate with the first terminal through the target application and the second terminal has not downloaded the target application, the second terminal can directly download the target application from the target data channel server. There is no need for the user to perform multiple operations. Therefore, user operations can be simplified, thus improving user experience.

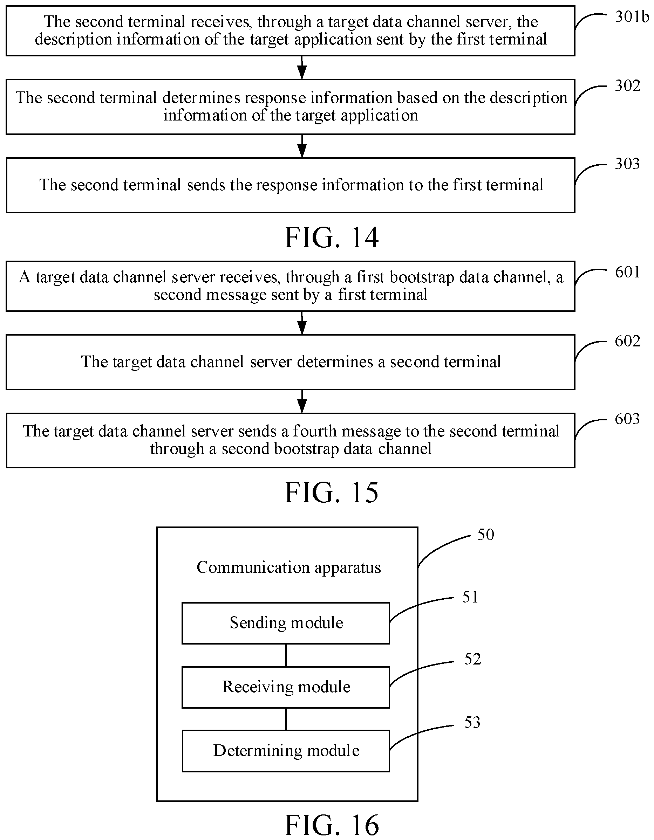

Example four:
optionally, in an embodiment of the present application, with reference to FIG. 10, as shown in FIG. 14, step 301 may be specifically implemented by using the following step 301b.

Step 301b: The second terminal receives, through a target data channel server, the description information of the target application sent by the first terminal.

In this embodiment of the present application, the target data channel server corresponds to the target application.

Optionally, in this embodiment of the present application, step 301b may be specifically implemented by using the following step 301b1.

Step 301b1: The second terminal receives a fourth message.

In this embodiment of the present application, the fourth message is sent by the target data channel server based on the second message sent by the first terminal, and the fourth message includes the description information of the target application. The second message is used for any one of the following: negotiating an application corresponding to a to-be-established data channel, negotiating an application used during a call, requesting to establish a data channel, and requesting to download the target application.

Further optionally, In this embodiment of the present application, the fourth message may be: an HTTP message.

Further optionally, in this embodiment of the present application, the second terminal can receive the fourth message from the target data channel server through a second bootstrap data channel.

FIG. 15 is a flowchart of a communication method according to an embodiment of the present application. As shown in FIG. 15, the communication method provided by this embodiment of the present application may include the following step 601 to step 603.

Step 601: A target data channel server receives, through a first bootstrap data channel, a second message sent by a first terminal.

In this embodiment of the present application, the second message includes description information of the target application.

Optionally, in this embodiment of the present application, the description information of the target application includes at least one of the following: identification information of the target application, attribute information of the target application, and type information of the target application.

In this embodiment of the present application, the target application includes one or more applications.

Optionally, in this embodiment of the present application, the second message is used for at least one of the following: negotiating an application corresponding to a to-be-established data channel, negotiating an application used during a call, requesting to establish a data channel, and requesting to download the target application.

Step 602: The target data channel server determines a second terminal.

Optionally, in this embodiment of the present application, the second message further includes identification information of the second terminal. Specifically, step 602 may be specifically implemented by using the following step 602a.

Step 602a: The target data channel server determines the second terminal based on the identification information of the second terminal.

Step 603: The target data channel server sends a fourth message to the second terminal through a second bootstrap data channel.

In this embodiment of the present application, the fourth message includes the description information of the target application. The description information of the target application is used by the second terminal to determine the response information. The response information is used by the first terminal to determine whether to communicate with the second terminal through the target application.

According to the communication method provided by this embodiment of the present application, the target data channel server can receive, through the first bootstrap data channel, the second message including the description information of the target application and sent by the first terminal, so that the target data channel server can determine the second terminal and send, through the second bootstrap data channel, the fourth message including description information of the target application to the second terminal. The description information of the target application is used by the second terminal to determine response information, and the response information is used by the first terminal to determine whether to communicate with the second terminal through the target application. The target data channel server can receive the description information of the target application sent by the first terminal and send the description information of the target application to the second terminal, so that the second terminal can determine the response information used by the first terminal to determine whether to communicate with the second terminal through the target application. In this way, instead of directly communicating with the second terminal through the target application, the first terminal can determine, based on the response information, whether to communicate with the second terminal through the target application. Therefore, privacy leakage of the user of the second terminal can be avoided, thus improving the security of the terminal.

Optionally, in this embodiment of the present application, after step 603, the communication method provided in this embodiment of the present application may further include the following step 701 and step 702.

Step 701: The target data channel server receives, through the second bootstrap data channel, the response information sent by the second terminal.

Step 702: The target data channel server sends the response information to the first terminal through the first bootstrap data channel.

The communication method provided by this embodiment of this application may be performed by a communication apparatus. In the embodiments of the present application, the communication apparatus performing the communication method is used as an example to describe the communication apparatus provided in the embodiments of the present application.

FIG. 16 is a possible schematic structural diagram of a communication apparatus according to an embodiment of the present application. As shown in FIG. 16, a communication apparatus 50 may include: a sending module 51, where the sending module 51 is configured to send description information of a target application to a second terminal; a receiving module 52, where the receiving module 52 is configured to receive response information sent by the second terminal, where the response information is determined by the second terminal based on the description information of the target application; and a determining module 53, where the determining module 53 is configured to determine, based on the response information received by the receiving module 52, whether to communicate with the second terminal through the target application.

In a possible implementation, the sending module 51 is specifically configured to send the description information of the target application to the second terminal through a first core network entity.

In a possible implementation, the sending module 51 is specifically configured to send a first message to the first core network entity, so that the first core network entity sends the description information of the target application to the second terminal based on the first message, where the first message includes the description information of the target application; and the first message is used for at least one of the following: negotiating an application corresponding to a to-be-established data channel, negotiating an application used during a call, requesting to establish a data channel, and requesting to download the target application.

In a possible implementation, the first message further includes information about a target data channel server, the target data channel server corresponds to the target application, and the information about the target data channel server is used by the second terminal to determine the target data channel server.

In a possible implementation, the first message is a SIP message. A SIP message header of the SIP message carries the description information of the target application, or an SDP of the SIP message carries the description information of the target application.

Optionally, the sending module 51 is configured to send a SIP message to the second terminal. The SIP message carries the description information of the target application, and a SIP message header of the SIP message may carry the description information of the target application, or an SDP of the SIP message may carry the description information of the target application.

In a possible implementation, a P-preferred-service message header of the SIP message carries the description information of the target application, or a row a of the SDP carries the description information of the target application.

In a possible implementation, the sending module 51 is specifically configured to send the description information of the target application to the second terminal through a target data channel server. The target data channel server corresponds to the target application.

In a possible implementation, the sending module 51 is specifically configured to send a second message to the target data channel server through a first bootstrap data channel, so that the target data channel server sends the description information of the target application to the second terminal based on the second message, where the second message includes the description information of the target application; and the second message is used for at least one of the following: negotiating an application corresponding to a to-be-established data channel, negotiating an application used during a call, requesting to establish a data channel, and requesting to download the target application.

In a possible implementation, the second message further includes identification information of the second terminal, and the identification information of the second terminal is used by the target data channel server to send the description information of the target application to the second terminal.

In a possible implementation, the sending module 51 is specifically configured to: in a case that a call connection is established between the communication apparatus 50 and the second terminal, send the description information of the target application to the second terminal.

In a possible implementation, the determining module 53 is specifically configured to: in a case that the response information is confirmation information, determine to communicate with the second terminal through the target application; or in a case that the response information is denial information, determine not to communicate with the second terminal through the target application.

In a possible implementation, the communication apparatus 50 provided in this embodiment of the present application may further include: an execution module, where the execution module is configured to: in a case that the communication apparatus 50 determines to communicate with the second terminal through the target application, perform a first operation; or in a case that the communication apparatus 50 determines not to communicate with the second terminal through the target application, perform a second operation; where the first operation includes at least one of the following: marking the target application as being available, establishing a data channel corresponding to the target application with the second terminal, and downloading the target application; and the second operation includes at least one of the following: marking the target application as being unavailable and deleting the downloaded target application.

Optionally, in a case that the first operation performed by the execution module is "establishing a data channel corresponding to the target application with the second terminal", the establishing, by the execution module, a data channel corresponding to the target application with the second terminal includes: sending, by the execution module, a SIP message to the second terminal. The SIP message carries the description information of the target application, for example, a SIP message header of the SIP message may carry the description information of the target application, or an SDP of the SIP message may carry the description information of the target application.

Optionally, a P-preferred-service message header of the SIP message carries the description information of the target application, or a row a of the SDP carries the description information of the target application.

Optionally, the target application includes one or more applications.

In a possible implementation, the description information of the target application includes at least one of the following: identification information of the target application, attribute information of the target application, and type information of the target application.

Instead of directly communicating with the second terminal through the target application, the communication apparatus provided by this embodiment of the present application can first send the description information of the target application to the second terminal, and determine, based on the response information, whether to communicate with the second terminal through the target application. Therefore, privacy leakage of the user of the second terminal can be avoided, thus improving the security of the terminal.

The communication apparatus in this embodiment of the present application may be an electronic device, such as an electronic device with an operating system, or may be a component in the electronic device, such as an integrated circuit or a chip. The electronic device may be a terminal or other devices other than the terminal. For example, the terminal may include but is not limited to the types of terminals 11 listed above, and other devices may be servers, network attached storage (Network Attached Storage, NAS), or the like, which are not specifically limited in this embodiment of this application.

The communication apparatus provided by this embodiment of the present application can implement the processes in the method embodiments in FIG. 1 to FIG. 9, and achieve the same technical effect. To avoid repetition, details are not described herein again.

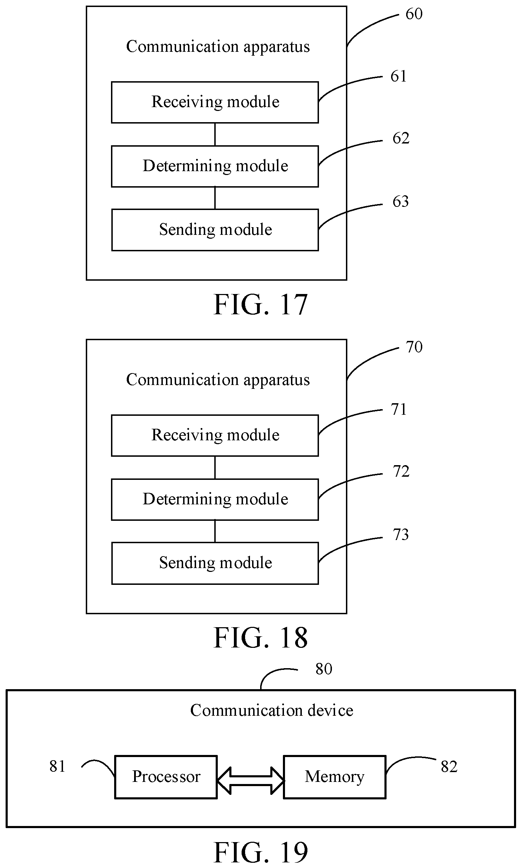

FIG. 17 is a possible schematic structural diagram of a communication apparatus according to an embodiment of the present application. As shown in FIG. 17, a communication apparatus 60 includes: a receiving module 61, where the receiving module 61 is configured to receive description information of a target application sent by a first terminal; a determining module 62, where the determining module 62 is configured to determine response information based on the description information of the target application received by the receiving module 61, where the response information is used by the first terminal to determine whether to communicate with the communication apparatus 60 through the target application; and a sending module 63, where the sending module 63 is configured to send the response information determined by the determining module 62 to the first terminal.

In a possible implementation, the communication apparatus 60 provided in this embodiment of the present application may further include: a display module, where the display module is configured to display information about the target application based on the description information of the target application; and the determining module 62 is specifically configured to: in response to an input, by a user, on the information about the target application displayed by the display module, determine the response information according to the input.

In a possible implementation, the determining module 62 is specifically configured to: in a case that the input is a first input, determine confirmation information corresponding to the first input as the response information; or in a case that the input is a second input, determine denial information corresponding to the second input as the response information; where the first input is different from the second input.

In a possible implementation, the receiving module 61 is specifically configured to receive, through a first core network entity, the description information of the target application sent by the first terminal.

In a possible implementation, the receiving module 61 is specifically configured to receive a third message, where the third message is sent by the first core network entity based on the first message sent by the first terminal, and the third message includes the description information of the target application; where the first message is used for any one of the following: negotiating an application corresponding to a to-be-established data channel, negotiating an application used during a call, requesting to establish a data channel, and requesting to download the target application.

In a possible implementation, the third message further includes information about a target data channel server, and the target data channel server corresponds to the target application. The communication apparatus 60 provided in this embodiment of the present application may further include: a downloading module, where the downloading module is configured to: in a case that the communication apparatus 60 determines to communicate with the first terminal through the target application, if the communication apparatus 60 has not downloaded the target application, download the target application from the target data channel server based on the information about the target data channel server.

In a possible implementation, the receiving module 61 is specifically configured to receive, through a target data channel server, the description information of the target application sent by the first terminal.

In a possible implementation, the receiving module 61 is specifically configured to receive a fourth message, where the fourth message is sent by the target data channel server based on the second message sent by the first terminal, and the fourth message includes the description information of the target application; where the second message is used for any one of the following: negotiating an application corresponding to a to-be-established data channel, negotiating an application used during a call, requesting to establish a data channel, and requesting to download the target application.

In a possible implementation, the communication apparatus 60 provided in this embodiment of the present application may further include: an execution module, where the execution module is configured to: in a case that the communication apparatus 60 determines to communicate with the first terminal through the target application, perform a third operation; or in a case that the communication apparatus 60 determines not to communicate with the first terminal through the target application, perform a fourth operation; where the third operation includes at least one of the following: marking the target application as being available and downloading the target application; and the fourth operation includes at least one of the following: marking the target application as being unavailable and deleting the downloaded target application.

In a possible implementation, the target application includes one or more applications.

In a possible implementation, the description information of the target application includes at least one of the following: identification information of the target application, attribute information of the target application, and type information of the target application.

Instead of directly communicating with the first terminal through the target application, the communication apparatus provided by this embodiment of the present application can determine the response information based on the description information of the target application, to determine whether the first terminal communicates with the communication apparatus through the target application. Therefore, privacy leakage of the user of the communication apparatus can be avoided, thus improving the security of the terminal.

The communication apparatus in this embodiment of the present application may be an electronic device, such as an electronic device with an operating system, or may be a component in the electronic device, such as an integrated circuit or a chip. The electronic device may be a terminal or other devices other than the terminal. For example, the terminal may include but is not limited to the types of terminals 11 listed above, and other devices may be servers, network attached storage (Network Attached Storage, NAS), or the like, which are not specifically limited in this embodiment of this application.

The communication apparatus provided by this embodiment of the present application can implement the processes in the method embodiments in FIG. 11 to FIG. 14, and achieve the same technical effect. To avoid repetition, details are not described herein again.

FIG. 18 is a possible schematic structural diagram of a communication apparatus according to an embodiment of the present application. As shown in FIG. 18, a communication apparatus 70 may include: a receiving module 71, where the receiving module 71 is configured to receive, through a first bootstrap data channel, a second message sent by a first terminal, where the second message includes description information of a target application; a determining module 72, where the determining module 72 is configured to determine a second terminal; and a sending module 73, where the sending module 73 is configured to send, through a second bootstrap data channel, a fourth message to the second terminal determined by the determining module 72, where the fourth message includes the description information of the target application, where the description information of the target application is used by the second terminal to determine response information, and the response information is used by the first terminal to determine whether to communicate with the second terminal through the target application.

In a possible implementation, the second message further includes identification information of the second terminal. The determining module 72 is specifically configured to determine the second terminal based on the identification information of the second terminal.

In a possible implementation, the second message is used for at least one of the following: negotiating an application corresponding to a to-be-established data channel, negotiating an application used during a call, requesting to establish a data channel, and requesting to download the target application.

In a possible implementation, the receiving module 71 is further configured to receive response information from the second terminal through the second bootstrap data channel. The sending module 73 is further configured to send the response information to the first terminal through the first bootstrap data channel.

In a possible implementation, the target application includes one or more applications.

In a possible implementation, the description information of the target application includes at least one of the following: identification information of the target application, attribute information of the target application, and type information of the target application.

The communication apparatus provided by this embodiment of the present application can receive the description information of the target application sent by the first terminal and send the description information of the target application to the second terminal, so that the second terminal can determine the response information used by the first terminal to determine whether to communicate with the second terminal through the target application. In this way, instead of directly communicating with the second terminal through the target application, the first terminal can determine, based on the response information, whether to communicate with the second terminal through the target application. Therefore, privacy leakage of the user of the second terminal can be avoided, thus improving the security of the terminal.

The communication apparatus in this embodiment of the present application may be an electronic device, such as an electronic device with an operating system, or may be a component in the electronic device, such as an integrated circuit or a chip. The electronic device may be a terminal or other devices other than the terminal. For example, the terminal may include but is not limited to the types of network side devices 12 listed above, and other devices may be servers, network attached storage (Network Attached Storage, NAS), or the like, which are not specifically limited in this embodiment of this application.

The communication apparatus provided by this embodiment of the present application can implement the processes in the method embodiments in FIG. 15, and achieve the same technical effect. To avoid repetition, details are not described herein again.

Optionally, in the embodiments of the present application, as shown in FIG. 19, an embodiment of the present application further provides a communication device 80, including a processor 81 and a memory 82. The memory 82 stores a program or an instruction executable on the processor 81. For example, when the communication device 80 is a terminal, when the program or the instruction is executed by the processor 81, steps of the embodiments of the communication method are implemented, and the same technical effect can be achieved. When the communication device 80 is a network side device, when the program or the instruction is executed by the processor 81, steps of the embodiments of the communication method are implemented, and the same technical effect can be achieved. To avoid repetition, details are not repeated herein.

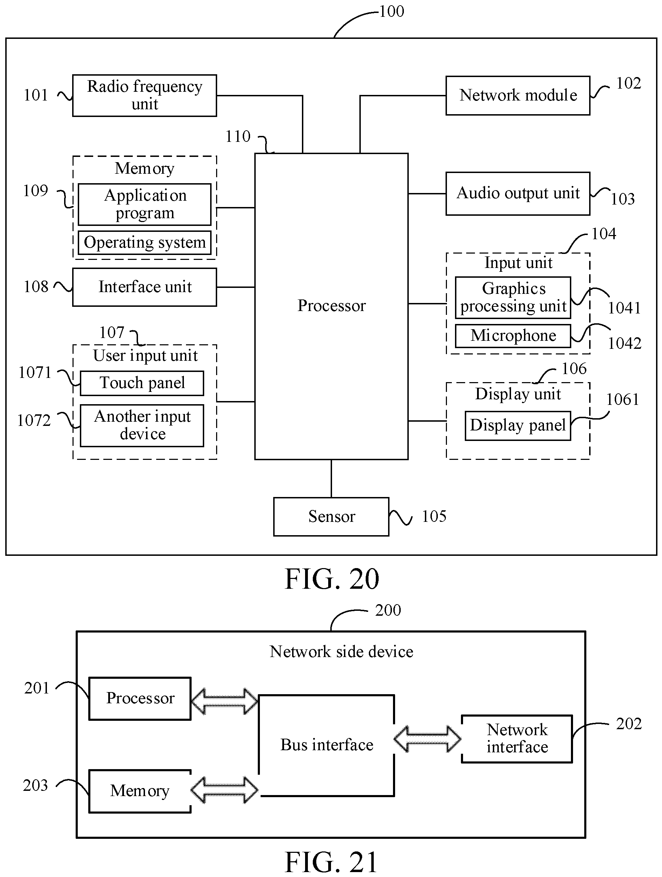

An embodiment of the present application further provides a terminal, including a processor and a communication interface. The communication interface is configured to send description information of a target application to a second terminal, and receive response information sent by the second terminal, where the response information is determined by the second terminal based on the description information of the target application. The processor is configured to determine, based on the response information, whether to communicate with the second terminal through the target application. This terminal embodiment corresponds to the above-mentioned method embodiment on the terminal side, and each implementation process and implementation of the above-mentioned method embodiment can be applied to this terminal embodiment, and can achieve the same technical effect. Specifically, FIG. 20 is a schematic diagram of a hardware structure of a terminal implementing an embodiment of this application.

The terminal 100 includes but is not limited to: at least some of a radio frequency unit 101, a network module 102, an audio output unit 103, an input unit 104, a sensor 105, a display unit 106, a user input unit 107, an interface unit 108, a memory 109, and a processor 110.

Persons skilled in the art can understand that the terminal 100 may further include a power supply (for example, a battery) supplying power to each component. The power supply may be logically connected to the processor 110 by using a power management system, so as to implement functions such as charging management, discharging management and power consumption management by using the power management system. The terminal structure shown in FIG. 20 does not constitute any limitation on the terminal, and the terminal may include more or fewer components than those shown in the figure, or combine some components, or have different component arrangements. Details are not described herein.

It should be understood that in the embodiments of this application, the input unit 104 may include a graphics processing unit (Graphics Processing Unit, GPU) 1041 and a microphone 1042, and the graphics processing unit 1041 processes image data of a still picture or video obtained by an image capture apparatus (such as a camera) in a video capture mode or an image capture mode. The display unit 106 may include a display panel 1061, and the display panel 1061 may be configured in a form of a liquid crystal display, an organic light-emitting diode or the like. The user input unit 107 includes at least one of a touch panel 1071 and another input device 1072. The touch panel 1071 is also called a touch screen The touch panel 1071 may include two parts: a touch detection apparatus and a touch controller. The another input device 1072 may include, but is not limited to, a physical keyboard, function keys (such as a volume control key and a switch key), a trackball, a mouse, and a joystick. Details are not described herein.

In the embodiments of this application, after receiving downlink data from the network side device, the radio frequency unit 101 can transmit the data to the processor 110 for processing. In addition, the radio frequency unit 101 can send uplink data to the network side device. Generally, the radio frequency unit 101 includes, but is not limited to, an antenna, an amplifier, a transceiver, a coupler, a low noise amplifier, a duplexer, and the like.

The memory 109 may be configured to store software programs and various pieces of data. The memory 109 may mainly include a first storage area storing a program or an instruction and a second storage area storing data, where the first storage area may store an operating system, an application program or instructions required by at least one function (for example, a sound playback function or an image playback function) and the like. Besides, the memory 109 may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 109 described in the embodiments of the present application is intended to include but is not limited to these and any other suitable types of memories.

The processor 110 may include one or more processing units. Optionally, the processor 110 integrates an application processor and a modem processor, where the application processor mainly processes an operating system, a user interface, an application program, and the like, and the modem processor mainly processes wireless communication signals, such as a baseband processor. It can be understood that the modem processor may not be integrated in the processor 110.

The radio frequency unit 101 is configured to send description information of a target application to a second terminal; and receive response information sent by the second terminal, where the response information is determined by the second terminal based on the description information of the target application.

The processor 110 is configured to determine, based on the response information, whether to communicate with the second terminal through the target application.

Instead of directly communicating with the second terminal through the target application, the terminal provided by this embodiment of the present application can first send the description information of the target application to the second terminal, and determine, based on the response information, whether to communicate with the second terminal through the target application. Therefore, privacy leakage of the user of the second terminal can be avoided, thus improving the security of the terminal.

Optionally, in this embodiment of the present application, the radio frequency unit 101 is specifically configured to send the description information of the target application to the second terminal through a first core network entity.

Optionally, in this embodiment of the present application, the radio frequency unit 101 is specifically configured to send a first message to the first core network entity, so that the first core network entity sends the description information of the target application to the second terminal based on the first message, where the first message includes the description information of the target application; and
the first message is used for at least one of the following: negotiating an application corresponding to a to-be-established data channel, negotiating an application used during a call, requesting to establish a data channel, and requesting to download the target application.

Optionally, in this embodiment of the present application, the radio frequency unit 101 is specifically configured to send the description information of the target application to the second terminal through a target data channel server.

The target data channel server corresponds to the target application.

Optionally, in this embodiment of the present application, the radio frequency unit 101 is specifically configured to send a second message to the target data channel server through a first bootstrap data channel, so that the target data channel server sends the description information of the target application to the second terminal based on the second message, where the second message includes the description information of the target application; and
the second message is used for at least one of the following: negotiating an application corresponding to a to-be-established data channel, negotiating an application used during a call, requesting to establish a data channel, and requesting to download the target application.

Optionally, in this embodiment of the present application, the radio frequency unit 101 is specifically configured to: in a case that a call connection is established between the terminal and the second terminal, send the description information of the target application to the second terminal.

Optionally, in this embodiment of the present application, the processor 110 is specifically configured to: in a case that the response information is confirmation information, determine to communicate with the second terminal through the target application; or in a case that the response information is denial information, determine not to communicate with the second terminal through the target application.

Optionally, in this embodiment of the present application, the processor 110 is further configured to: in a case that the terminal determines to communicate with the second terminal through the target application, perform a first operation; or in a case that the terminal determines not to communicate with the second terminal through the target application, perform a second operation;
where the first operation includes at least one of the following: marking the target application as being available, establishing a data channel corresponding to the target application with the second terminal, and downloading the target application; and the second operation includes at least one of the following: marking the target application as being unavailable and deleting the downloaded target application.

An embodiment of the present application further provides a terminal, including a processor and a communication interface. The communication interface is configured to receive description information of a target application from a first terminal. The processor is configured to determine response information based on the description information of the target application, where the response information is used by a first terminal to determine whether to communicate with the terminal through the target application. The communication interface is further configured to send the response information to the first terminal. This terminal embodiment corresponds to the above-mentioned method embodiment on the terminal side, and each implementation process and implementation of the above-mentioned method embodiment can be applied to this terminal embodiment, and can achieve the same technical effect. Specifically, FIG. 20 is a schematic diagram of a hardware structure of a terminal implementing an embodiment of this application.

A terminal 100 includes but is not limited to: at least some of a radio frequency unit 101, a network module 102, an audio output unit 103, an input unit 104, a sensor 105, a display unit 106, a user input unit 107, an interface unit 108, a memory 109, and a processor 110.

Persons skilled in the art can understand that the terminal 100 may further include a power supply (for example, a battery) supplying power to each component. The power supply may be logically connected to the processor 110 by using a power management system, so as to implement functions such as charging management, discharging management and power consumption management by using the power management system. The terminal structure shown in FIG. 20 does not constitute any limitation on the terminal, and the terminal may include more or fewer components than those shown in the figure, or combine some components, or have different component arrangements. Details are not described herein.

It should be understood that in the embodiments of this application, the input unit 104 may include a graphics processing unit (Graphics Processing Unit, GPU) 1041 and a microphone 1042, and the graphics processing unit 1041 processes image data of a still picture or video obtained by an image capture apparatus (such as a camera) in a video capture mode or an image capture mode. The display unit 106 may include a display panel 1061, and the display panel 1061 may be configured in a form of a liquid crystal display, an organic light-emitting diode or the like. The user input unit 107 includes at least one of a touch panel 1071 and another input device 1072. The touch panel 1071 is also called a touch screen The touch panel 1071 may include two parts: a touch detection apparatus and a touch controller. The another input device 1072 may include, but is not limited to, a physical keyboard, function keys (such as a volume control key and a switch key), a trackball, a mouse, and a joystick. Details are not described herein.

In the embodiments of this application, after receiving downlink data from the network side device, the radio frequency unit 101 can transmit the data to the processor 110 for processing. In addition, the radio frequency unit 101 can send uplink data to the network side device. Generally, the radio frequency unit 101 includes, but is not limited to, an antenna, an amplifier, a transceiver, a coupler, a low noise amplifier, a duplexer, and the like.

The memory 109 may be configured to store software programs and various pieces of data. The memory 109 may mainly include a first storage area storing a program or an instruction and a second storage area storing data, where the first storage area may store an operating system, an application program or instructions required by at least one function (for example, a sound playback function or an image playback function) and the like. Besides, the memory 109 may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 109 described in the embodiments of the present application is intended to include but is not limited to these and any other suitable types of memories.

The processor 110 may include one or more processing units. Optionally, the processor 110 integrates an application processor and a modem processor, where the application processor mainly processes an operating system, a user interface, an application program, and the like, and the modem processor mainly processes wireless communication signals, such as a baseband processor. It can be understood that the modem processor may not be integrated in the processor 110.

The radio frequency unit 101 is configured to receive description information of a target application sent by a first terminal.

The processor 110 is configured to determine response information based on the description information of the target application, where the response information is used by the first terminal to determine whether to communicate with the terminal through the target application.

The radio frequency unit 101 is further configured to send the response information to the first terminal.

Instead of directly communicating with the first terminal through the target application, the terminal provided by this embodiment of the present application can determine the response information based on the description information of the target application, to determine whether the first terminal communicates with the terminal through the target application. Therefore, privacy leakage of the user of the terminal can be avoided, thus improving the security of the terminal.

Optionally, in this embodiment of the present application, the display unit 106 is configured to display information about the target application based on the description information of the target application.

The processor 110 is specifically configured to: in response to an input on the information about the target application by a user, determine the response information according to the input.

Optionally, in this embodiment of the present application, the processor 110 is specifically configured to: in a case that the input is a first input, determine confirmation information corresponding to the first input as the response information; or in a case that the input is a second input, determine denial information corresponding to the second input as the response information;
where the first input is different from the second input.

Optionally, in this embodiment of the present application, the radio frequency unit 101 is specifically configured to receive, through a first core network entity, the description information of the target application sent by the first terminal.

Optionally, in this embodiment of the present application, the radio frequency unit 101 is specifically configured to receive a third message, where the third message is sent by the first core network entity based on the first message sent by the first terminal, and the third message includes the description information of the target application;
where the first message is used for any one of the following: negotiating an application corresponding to a to-be-established data channel, negotiating an application used during a call, requesting to establish a data channel, and requesting to download the target application.

Optionally, in this embodiment of the present application, the third message further includes information about a target data channel server, and the target data channel server corresponds to the target application.

The radio frequency unit 101 is further configured to: in a case that the terminal determines to communicate with the first terminal through the target application, if the terminal has not downloaded the target application, download the target application from the target data channel server based on the information about the target data channel server.

Optionally, in this embodiment of the present application, the radio frequency unit 101 is specifically configured to receive, through a target data channel server, the description information of the target application sent by the first terminal.

The target data channel server corresponds to the target application.

Optionally, in this embodiment of the present application, the radio frequency unit 101 is specifically configured to receive a fourth message, where the fourth message is sent by the target data channel server based on the second message sent by the first terminal, and the fourth message includes the description information of the target application;
where the second message is used for any one of the following: negotiating an application corresponding to a to-be-established data channel, negotiating an application used during a call, requesting to establish a data channel, and requesting to download the target application.

Optionally, in this embodiment of the present application, the processor 110 is further configured to: in a case that the terminal determines to communicate with the first terminal through the target application, perform a third operation; or in a case that the terminal determines not to communicate with the first terminal through the target application, perform a fourth operation;
where the third operation includes at least one of the following: marking the target application as being available and downloading the target application; and the fourth operation includes at least one of the following: marking the target application as being unavailable and deleting the downloaded target application.

An embodiment of the present application further provides a network side device. As shown in FIG. 21, a network side device 200 includes: a processor 201, a network interface 202, and a memory 203. The network interface 202 is, for example, a common public radio interface (common public radio interface, CPRI).

Specifically, the network side device 200 in this embodiment of the present invention further includes: an instruction or a program stored on the memory 203 and executable on the processor 201, and the processor 201 invokes the instruction or program in the memory 203 to execute the method executed by the modules shown in FIG. 18, and achieve the same technical effect. To avoid repetition, details are not described herein again.

An embodiment of the present application further provides a readable storage medium. The readable storage medium stores a program or an instruction, and when the program or the instruction is executed by a processor, the processes of the foregoing embodiment of the communication method are performed and the same technical effects can be achieved. To avoid repetition, details are not described herein again.

The processor is a processor in the terminal in the above embodiments. The readable storage medium includes a computer-readable storage medium, such as a computer read-only memory ROM, a random access memory RAM, a magnetic disk, an optical disc, or the like.

An embodiment of the present application further provides a chip, the chip includes a processor and a communication interface, the communication interface is coupled to the processor, and the processor is configured to run a program or an instruction to implement the processes of the foregoing embodiment of the communication method and the same technical effects can be achieved. To avoid repetition, details are not described herein again.

It should be understood that the chips mentioned in the embodiments of the present application may also be called a system-level chip, a system chip, a chip system, or a system-on-chip.

An embodiment of the present application further provides a computer program/program product, the computer program/program product is stored in a storage medium, and the computer program/program product is executed by at least one processor to implement processes of the foregoing embodiment of the communication method, and the same technical effects can be achieved. To avoid repetition, details are not described herein again.

An embodiment of the present application further provides a communication system, including: a terminal and a network side device. The terminal can be configured to perform the steps of the communication method corresponding to the first terminal as described above, or can be configured to perform the steps of the communication method corresponding to the second terminal as described above. The network side device can be configured to perform the steps of the communication method corresponding to the target data channel server as described above.

It should be noted that in this specification, the terms "comprise", "include", and any other variants thereof are intended to cover non-exclusive inclusion, so that a process, a method, an article, or an apparatus that includes a series of elements not only includes these very elements, but also includes other elements not expressly listed, or also includes elements inherent to this process, method, article, or apparatus. Without more limitations, elements defined by the sentence "including one" does not exclude that there are still other same elements in this process, method, article, or apparatus. In addition, it should be pointed out that the scope of the methods and apparatuses in the implementations of the present application is not limited to performing functions in the order shown or discussed, and may also include performing functions in a substantially simultaneous manner or in a reverse order according to the functions involved, for example, the described methods may be performed in an order different from that described, and various steps may also be added, omitted, or combined. In addition, features described with reference to some examples may be combined in other examples.

According to the descriptions in the foregoing implementations, a person skilled in the art may clearly learn that the method according to the foregoing embodiment may be implemented by relying on software and a necessary common hardware platform or by using hardware. However, in many cases, the former is a better implementation. Based on such an understanding, the technical solutions of this application essentially, or the part contributing to the prior art may be implemented in a form of a computer software product. The computer software product is stored in a storage medium (for example, a ROM/RAM, a magnetic disk, or a compact disc), and includes a plurality of instructions for instructing a terminal (which may be a mobile phone, a computer, a server, an air conditioner, a network device, or the like) to perform the method described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A communication method, comprising:
sending, by a first terminal, description information of a target application to a second terminal;
receiving, by the first terminal, response information sent by the second terminal, wherein the response information is determined by the second terminal based on the description information of the target application; and
determining, by the first terminal based on the response information, whether to communicate with the second terminal through the target application.

2. The method according to claim 1, wherein the sending, by a first terminal, description information of a target application to a second terminal comprises:
sending, by the first terminal, the description information of the target application to the second terminal through a first core network entity.

3. The method according to claim 2, wherein the sending, by the first terminal, the description information of the target application to the second terminal through a first core network entity comprises:
sending, by the first terminal, a first message to the first core network entity, so that the first core network entity sends the description information of the target application to the second terminal based on the first message, wherein the first message comprises the description information of the target application; and
the first message is used for at least one of the following: negotiating an application corresponding to a to-be-established data channel, negotiating an application used during a call, requesting to establish a data channel, and requesting to download the target application.

4. The method according to claim 3, wherein the first message further comprises information about a target data channel server, the target data channel server corresponds to the target application, and the information about the target data channel server is used by the second terminal to determine the target data channel server.

5. The method according to claim 3 or 4, wherein the first message is a session initialization protocol SIP message; and
a SIP message header of the SIP message carries the description information of the target application, or a session description protocol SDP of the SIP message carries the description information of the target application.

6. The method according to claim 1, wherein the sending, by a first terminal, description information of a target application to a second terminal comprises:
sending, by the first terminal, a SIP message to the second terminal, wherein a SIP message header of the SIP message carries the description information of the target application, or an SDP of the SIP message carries the description information of the target application.

7. The method according to claim 1, wherein the sending, by a first terminal, description information of a target application to a second terminal comprises:
sending, by the first terminal, the description information of the target application to the second terminal through a target data channel server;
wherein the target data channel server corresponds to the target application.

8. The method according to claim 7, wherein the sending, by the first terminal, the description information of the target application to the second terminal through a target data channel server comprises:
sending, by the first terminal, a second message to the target data channel server through a first bootstrap data channel, so that the target data channel server sends the description information of the target application to the second terminal based on the second message, wherein the second message comprises the description information of the target application; and
the second message is used for at least one of the following: negotiating an application corresponding to a to-be-established data channel, negotiating an application used during a call, requesting to establish a data channel, and requesting to download the target application.

9. The method according to claim 8, wherein the second message further comprises identification information of the second terminal, and the identification information of the second terminal is used by the target data channel server to send the description information of the target application to the second terminal.

10. The method according to claim 1, wherein the sending, by a first terminal, description information of a target application to a second terminal comprises:
in a case that a call connection is established between the first terminal and the second terminal, sending, by the first terminal, the description information of the target application to the second terminal.

11. The method according to claim 1, wherein the determining, by the first terminal based on the response information, whether to communicate with the second terminal through the target application comprises:
in a case that the response information is confirmation information, determining, by the first terminal, to communicate with the second terminal through the target application; or
in a case that the response information is denial information, determining, by the first terminal, not to communicate with the second terminal through the target application.

12. The method according to claim 1, further comprising:
in a case that the first terminal determines to communicate with the second terminal through the target application, performing, by the first terminal, a first operation; or
in a case that the first terminal determines not to communicate with the second terminal through the target application, performing, by the first terminal, a second operation;
wherein the first operation comprises at least one of the following: marking the target application as being available, establishing a data channel corresponding to the target application with the second terminal, and downloading the target application; and
the second operation comprises at least one of the following: marking the target application as being unavailable and deleting the downloaded target application.

13. The method according to claim 12, wherein the establishing, by the first terminal, a data channel corresponding to the target application with the second terminal comprises:
sending, by the first terminal, a SIP message to the second terminal, wherein a SIP message header of the SIP message carries the description information of the target application, or an SDP of the SIP message carries the description information of the target application.

14. The method according to claim 5, 6, or 13, wherein a P-preferred-service message header of the SIP message carries the description information of the target application, or a row a of the SDP carries the description information of the target application.

15. The method according to any one of claims 1 to 14, wherein the target application comprises one or more applications.

16. The method according to any one of claims 1 to 15, wherein the description information of the target application comprises at least one of the following: identification information of the target application, attribute information of the target application, and type information of the target application.

17. A communication method, comprising:
receiving, by the second terminal, description information of a target application sent by a first terminal;
determining, by the second terminal, response information based on the description information of the target application, wherein the response information is used by the first terminal to determine whether to communicate with the second terminal through the target application; and
sending, by the second terminal, the response information to the first terminal.

18. The method according to claim 17, wherein the determining, by the second terminal, response information based on the description information of the target application comprises:
displaying, by the second terminal, information about the target application based on the description information of the target application; and
in response to an input on the information about the target application by a user, determining, by the second terminal, the response information according to the input.

19. The method according to claim 18, wherein the determining the response information according to the input comprises:
in a case that the input is a first input, determining, by the second terminal, confirmation information corresponding to the first input as the response information; or
in a case that the input is a second input, determining, by the second terminal, denial information corresponding to the second input as the response information;
wherein the first input is different from the second input.

20. The method according to claim 17, wherein the receiving, by the second terminal, description information of a target application sent by a first terminal comprises:
receiving, by the second terminal through a first core network entity, the description information of the target application sent by the first terminal.

21. The method according to claim 20, wherein the receiving, by the second terminal through a first core network entity, the description information of the target application sent by the first terminal comprises:
receiving, by the second terminal, a third message, wherein the third message is sent by the first core network entity based on the first message sent by the first terminal, and the third message comprises the description information of the target application;
wherein the first message is used for any one of the following: negotiating an application corresponding to a to-be-established data channel, negotiating an application used during a call, requesting to establish a data channel, and requesting to download the target application.

22. The method according to claim 21, wherein the third message further comprises information about a target data channel server, and the target data channel server corresponds to the target application; and the method further comprises:
in a case that the second terminal determines to communicate with the first terminal through the target application, if the second terminal has not downloaded the target application, downloading, by the second terminal, the target application from the target data channel server based on the information about the target data channel server.

23. The method according to claim 17, wherein the receiving, by the second terminal, description information of a target application sent by a first terminal comprises:
receiving, by the second terminal through a target data channel server, the description information of the target application sent by the first terminal;
wherein the target data channel server corresponds to the target application.

24. The method according to claim 23, wherein the receiving, by the second terminal through a target data channel server, the description information of the target application sent by the first terminal comprises:
receiving, by the second terminal, a fourth message, wherein the fourth message is sent by the target data channel server based on a second message sent by the first terminal, and the fourth message comprises the description information of the target application;
wherein the second message is used for any one of the following: negotiating an application corresponding to a to-be-established data channel, negotiating an application used during a call, requesting to establish a data channel, and requesting to download the target application.

25. The method according to claim 17, further comprising:
in a case that the second terminal determines to communicate with the first terminal through the target application, performing, by the second terminal, a third operation; or
in a case that the second terminal determines not to communicate with the first terminal through the target application, performing, by the second terminal, a fourth operation;
wherein the third operation comprises at least one of the following: marking the target application as being available and downloading the target application; and
the fourth operation comprises at least one of the following: marking the target application as being unavailable and deleting the downloaded target application.

26. The method according to any one of claims 17 to 25, wherein the target application comprises one or more applications.

27. The method according to any one of claims 17 to 26, wherein the description information of the target application comprises at least one of the following: identification information of the target application, attribute information of the target application, and type information of the target application.

28. A communication method, comprising:
receiving, by a target data channel server through a first bootstrap data channel, a second message sent by a first terminal, wherein the second message comprises description information of a target application;
determining, by the target data channel server, a second terminal; and
sending, by the target data channel server through a second bootstrap data channel, a fourth message to the second terminal, wherein the fourth message comprises the description information of the target application;
wherein the description information of the target application is used by the second terminal to determine response information, and the response information is used by the first terminal to determine whether to communicate with the second terminal through the target application.

29. The method according to claim 28, wherein the second message further comprises identification information of the second terminal; and
the determining, by the target data channel server, a second terminal comprises:
determining, by the target data channel server, the second terminal based on the identification information of the second terminal.

30. The method according to claim 28, wherein the second message is used for at least one of the following: negotiating an application corresponding to a to-be-established data channel, negotiating an application used during a call, requesting to establish a data channel, and requesting to download the target application.

31. The method according to claim 28, further comprising:
receiving, by the target data channel server through the second bootstrap data channel, the response information sent by the second terminal; and
sending, by the target data channel server, the response information to the first terminal through the first bootstrap data channel.

32. The method according to any one of claims 28 to 31, wherein the target application comprises one or more applications.

33. The method according to any one of claims 28 to 31, wherein the description information of the target application comprises at least one of the following: identification information of the target application, attribute information of the target application, and type information of the target application.

34. A communication apparatus, comprising:
a sending module, wherein the sending module is configured to send description information of a target application to a second terminal;
a receiving module, wherein the receiving module is configured to receive response information sent by the second terminal, wherein the response information is determined by the second terminal based on the description information of the target application; and
a determining module, wherein the determining module is configured to determine, based on the response information received by the receiving module, whether to communicate with the second terminal through the target application.

35. The communication apparatus according to claim 34, wherein the sending module is specifically configured to send the description information of the target application to the second terminal through a first core network entity.

36. The communication apparatus according to claim 35, wherein the sending module is specifically configured to send a first message to the first core network entity, so that the first core network entity sends the description information of the target application to the second terminal based on the first message, wherein the first message comprises the description information of the target application; and
the first message is used for at least one of the following: negotiating an application corresponding to a to-be-established data channel, negotiating an application used during a call, requesting to establish a data channel, and requesting to download the target application.

37. The communication apparatus according to claim 36, wherein the first message further comprises information about a target data channel server, the target data channel server corresponds to the target application, and the information about the target data channel server is used by the second terminal to determine the target data channel server.

38. The communication apparatus according to claim 36 or 37, wherein the first message is a SIP message; and a SIP message header of the SIP message carries the description information of the target application, or an SDP of the SIP message carries the description information of the target application.

39. The communication apparatus according to claim 34, wherein the sending module is configured to send a SIP message to the second terminal, wherein a SIP message header of the SIP message carries the description information of the target application, or an SDP of the SIP message carries the description information of the target application.

40. The communication apparatus according to claim 34, wherein the sending module is specifically configured to send the description information of the target application to the second terminal through a target data channel server;
wherein the target data channel server corresponds to the target application.

41. The communication apparatus according to claim 40, wherein the sending module is specifically configured to send a second message to the target data channel server through a first bootstrap data channel, so that the target data channel server sends the description information of the target application to the second terminal based on the second message, wherein the second message comprises the description information of the target application; and
the second message is used for at least one of the following: negotiating an application corresponding to a to-be-established data channel, negotiating an application used during a call, requesting to establish a data channel, and requesting to download the target application.

42. The communication apparatus according to claim 41, wherein the second message further comprises identification information of the second terminal, and the identification information of the second terminal is used by the target data channel server to send the description information of the target application to the second terminal.

43. The communication apparatus according to claim 34, wherein the sending module is specifically configured to: in a case that a call connection is established between the communication apparatus and the second terminal, send the description information of the target application to the second terminal.

44. The communication apparatus according to claim 34, wherein the determining module is specifically configured to: in a case that the response information is confirmation information, determine to communicate with the second terminal through the target application; or in a case that the response information is denial information, determine not to communicate with the second terminal through the target application.

45. The communication apparatus according to claim 34, further comprising: an execution module; wherein the execution module is configured to: in a case that the communication apparatus determines to communicate with the second terminal through the target application, perform a first operation; or
in a case that the communication apparatus determines not to communicate with the second terminal through the target application, perform a second operation;
wherein the first operation comprises at least one of the following: marking the target application as being available, establishing a data channel corresponding to the target application with the second terminal, and downloading the target application; and
the second operation comprises at least one of the following: marking the target application as being unavailable and deleting the downloaded target application.

46. The communication apparatus according to claim 45, wherein the establishing, by the execution module, a data channel corresponding to the target application with the second terminal comprises:
sending, by the execution module, a SIP message to the second terminal, wherein a SIP message header of the SIP message carries the description information of the target application, or an SDP of the SIP message carries the description information of the target application.

47. The communication apparatus according to claim 38, 39, or 45, wherein a P-preferred-service message header of the SIP message carries the description information of the target application, or a row a of the SDP carries the description information of the target application.

48. The communication apparatus according to any one of claims 34 to 47, wherein the target application comprises one or more applications.

49. The communication apparatus according to any one of claims 34 to 48, wherein the description information of the target application comprises at least one of the following: identification information of the target application, attribute information of the target application, and type information of the target application.

50. A communication apparatus, comprising:
a receiving module, wherein the receiving module is configured to receive description information of a target application sent by a first terminal;
a determining module, wherein the determining module is configured to determine response information based on the description information of the target application received by the receiving module, wherein the response information is used by the first terminal to determine whether to communicate with the communication apparatus through the target application; and
a sending module, wherein the sending module is configured to send the response information determined by the determining module to the first terminal.

51. The communication apparatus according to claim 50, further comprising:
a display module, wherein the display module is configured to display information about the target application based on the description information of the target application; and
the determining module is specifically configured to: in response to an input, by a user, on the information about the target application displayed by the display module, determine the response information according to the input.

52. The communication apparatus according to claim 51, wherein the determining module is specifically configured to: in a case that the input is a first input, determine confirmation information corresponding to the first input as the response information; or in a case that the input is a second input, determine denial information corresponding to the second input as the response information;
wherein the first input is different from the second input.

53. The communication apparatus according to claim 50, wherein the receiving module is specifically configured to receive, through a first core network entity, the description information of the target application sent by the first terminal.

54. The communication apparatus according to claim 53, wherein the receiving module is specifically configured to receive a third message, wherein the third message is sent by the first core network entity based on the first message sent by the first terminal, and the third message comprises the description information of the target application;
wherein the first message is used for any one of the following: negotiating an application corresponding to a to-be-established data channel, negotiating an application used during a call, requesting to establish a data channel, and requesting to download the target application.

55. The communication apparatus according to claim 54, wherein the third message further comprises information about a target data channel server, and the target data channel server corresponds to the target application; and
the communication apparatus further comprises:
a downloading module, wherein the downloading module is configured to: in a case that the communication apparatus determines to communicate with the first terminal through the target application, if the communication apparatus has not downloaded the target application, download the target application from the target data channel server based on the information about the target data channel server.

56. The communication apparatus according to claim 50, wherein the receiving module is specifically configured to receive, through a target data channel server, the description information of the target application sent by the first terminal;
wherein the target data channel server corresponds to the target application.

57. The communication apparatus according to claim 56, wherein the receiving module is specifically configured to receive a fourth message, wherein the fourth message is sent by the target data channel server based on a second message sent by the first terminal, and the fourth message comprises the description information of the target application;
wherein the second message is used for any one of the following: negotiating an application corresponding to a to-be-established data channel, negotiating an application used during a call, requesting to establish a data channel, and requesting to download the target application.

58. The communication apparatus according to claim 50, further comprising:
an execution module, wherein the execution module is configured to: in a case that the communication apparatus determines to communicate with the first terminal through the target application, perform a third operation; or in a case that the communication apparatus determines not to communicate with the first terminal through the target application, perform a fourth operation;
wherein the third operation comprises at least one of the following: marking the target application as being available and downloading the target application; and
the fourth operation comprises at least one of the following: marking the target application as being unavailable and deleting the downloaded target application.

59. The communication apparatus according to any one of claims 50 to 58, wherein the target application comprises one or more applications.

60. The communication apparatus according to any one of claims 50 to 59, wherein the description information of the target application comprises at least one of the following: identification information of the target application, attribute information of the target application, and type information of the target application.

61. A communication apparatus, comprising:
a receiving module, wherein the receiving module is configured to receive, through a first bootstrap data channel, a second message sent by a first terminal, wherein the second message comprises description information of a target application;
a determining module, wherein the determining module is configured to determine a second terminal; and
a sending module, wherein the sending module is configured to send, through a second bootstrap data channel, a fourth message to the second terminal determined by the determining module, wherein the fourth message comprises the description information of the target application,
wherein the description information of the target application is used by the second terminal to determine response information, and the response information is used by the first terminal to determine whether to communicate with the second terminal through the target application.

62. The communication apparatus according to claim 61, wherein the second message further comprises identification information of the second terminal; and
the determining module is specifically configured to determine the second terminal based on the identification information of the second terminal.

63. The communication apparatus according to claim 61, wherein the second message is used for at least one of the following: negotiating an application corresponding to a to-be-established data channel, negotiating an application used during a call, requesting to establish a data channel, and requesting to download the target application.

64. The communication apparatus according to claim 61, wherein the receiving module is further configured to receive, through the second bootstrap data channel, the response information sent by the second terminal; and
the sending module is further configured to send the response information to the first terminal through the first bootstrap data channel.

65. The communication apparatus according to any one of claims 61 to 64, wherein the target application comprises one or more applications.

66. The communication apparatus according to any one of claims 61 to 65, wherein the description information of the target application comprises at least one of the following: identification information of the target application, attribute information of the target application, and type information of the target application.

67. A terminal, comprising a processor and a memory, wherein the memory stores a program or an instruction executable on the processor, and when the program or the instruction is executed by the processor, the steps of the communication method according to any one of claims 1 to 27 are implemented.

68. A network side device, comprising a processor and a memory, wherein the memory stores a program or an instruction executable on the processor, and when the program or the instruction is executed by the processor, the steps of the communication method according to any one of claims 28 to 33 are implemented.

69. A readable storage medium, storing a program or an instruction, wherein when the program or the instruction is executed by a processor, the communication methods according to any one of claims 1 to 33 are implemented.

70. A chip, comprising a processor and a communication interface, wherein the communication interface is coupled to the processor, and the processor is configured to run a program or an instruction to implement the communication methods according to any one of claims 1 to 33.

71. A computer program product, stored in a non-volatile storage medium, wherein the computer program product is executed by at least one processor to implement the communication methods according to any one of claims 1 to 33.

72. An electronic device, configured to perform the communication methods according to any one of claims 1 to 33.
